# EUROPÄISCHE PATENTSCHRIFT

(11) **EP 1 885 536 B1**
(45) Veröffentlichungstag und Bekanntmachung des Hinweises auf die Patenterteilung: **21.01.2009**
(21) Anmeldenummer: 06742650.2
(22) Anmeldetag: 24.04.2006
(51) Int. Cl.: B29C 37/00, C08G 18/67, C09D 175/16

(54) **VERFAHREN ZUR HERSTELLUNG VON EINE BESCHICHTUNG AUFWEISENDEN FOLIEN, DIE SO ERHALTENEN FOLIEN, SOWIE IHRE VERWENDUNG ZUR HERSTELLUNG VON FORMTEILEN, INSBESONDERE ZUR ANWENDUNG IM AUTOMOBILBAU**
METHOD FOR PRODUCING FILMS HAVING A COATING, THE FILMS OBTAINED IN THIS WAY, AND THEIR USE FOR PRODUCING MOULDED PARTS, IN PARTICULAR FOR USE IN AUTOMOBILE CONSTRUCTION
PROCEDE DE FABRICATION DE FILMS POSSEDANT UN REVETEMENT, FILMS AINSI OBTENUS, AINSI QUE LEUR UTILISATION POUR LA FABRICATION DE PIECES MOULEES, DESTINEES A ETRE UTILISEES EN PARTICULIER DANS LA CONSTRUCTION AUTOMOBILE

(30) Priorität: 03.05.2005 DE 102005020605
(43) Veröffentlichungstag der Anmeldung: 13.02.2008
(73) Patentinhaber: BASF Coatings AG, 48165 Münster (DE)
(72) Erfinder: SCHLOTTERBECK, Ulf, 68165 Mannheim (DE); RAKA, Fatmir, 48143 Münster (DE); BIALLAS, Bernd, 48324 Albesloh (DE)
(74) Vertreter: Leifert & Steffan
(86) Internationale Anmeldenummer: PCT/EP2006/003733
(87) Internationale Veröffentlichungsnummer: WO 2006/117091

(56) Entgegenhaltungen:
- EP-A- 0 819 516
- WO-A-00/63015
- WO-A-03/018214

## Beschreibung

### Gebiet der Erfindung

Die vorliegende Erfindung betrifft ein Verfahren zur Herstellung von eine Beschichtung (B) aufweisenden Folien (F), bei dem man auf eine ggf. vorbehandelte Oberfläche (T1) einer Trägerfolie (T)
1: ein vernetzbares Beschichungsmittel (K), das eine radikalisch vernetzbare Komponente (KK) enthält und das nach der Endvernetzung eine transparente Beschichtung (KE) ergibt, aufgebracht wird,
2. das in Stufe 1 aufgebrachte Beschichtungsmittel (K) getrocknet und/oder partiell vernetzt wird, wodurch eine noch nicht endvernetzte Beschichtung (KT) erzeugt wird,
3. auf die noch nicht endvernetzte Beschichtung (KT) ein pigmentiertes Beschichtungsmittel (P) aufgebracht wird und
4. aus dem in Stufe 3 aufgebrachten Beschichtungsmittel (P) eine Beschichtung (PB) erzeugt wird,
5. ggf. auf die Beschichtung (PB) eine Haftvermittlerschicht (H) aufgebracht und ggf. getrocknet wird,
wobei das vernetzbare Beschichtungsmittel (K) eine radikalisch vernetzbare Komponente (KK) enthält, die
(i) ein oder mehrere Oligo- und/oder ein oder mehrere PolyUrethan(meth)acrylate enthält und
(ii) ein zahlenmittleres Molekulargewicht von 1.000 bis 50.000 g/mol, bevorzugt von 2.000 bis 6.000 g/mol und besonders bevorzugt von 2.200 bis 5.000 g/mol, und
(iii) einen Doppelbindungsgehalt von 1,0 bis 5,0 mol Doppelbindungen pro 1.000 g reaktive Komponente (KK), vorzugsweise einen Doppelbindungsgehalt von 1,5 bis 4,0 mol Doppelbindungen pro 1.000 g reaktive Komponente (KK) und besonders bevorzugt von mehr als 2,0 bis 3,5 mol Doppelbindungen pro 1.000 g reaktive Komponente (KK),
aufweist.

Die vorliegende Erfindung betrifft außerdem die mittels des Verfahrens erhältlichen, eine Beschichtung aufweisenden Folien (F) und ihre Verwendung zur Herstellung von Formteilen, insbesondere zur Anwendung im Automobilbau.

### Stand der Technik

Formteile aus einem mit einer Folie versehenen Kunststoffmaterial sind dem Fachmann bekannt. Hierbei ist es sowohl möglich, Kunststoffbauteile mit einer Folie zu kaschieren oder zu bekleben oder die Folien unmittelbar im Formgebungswerkzeug mit dem Kunststoffmaterial zu hinterspritzen, hinterpressen oder hinterschäumen (A. Grefenstein, "Folienhinterspritzen statt Lackieren, Neue Technik für Karosseriebauteile aus Kunststoff" in Metalloberfläche, 10/99, 53. Jahrgang, Carl Hanser Verlag, München, 1999).

Die zur Herstellung der Formteile eingesetzten mehrschichtigen, farb- und/oder effektgebenden Folien umfassen bekanntermaßen eine Trägerfolie, mindestens eine farb- und/oder effektgebende Basislackierung und eine Klarlackierung. Sie entsprechen in ihrem Aufbau den herkömmlichen farb- und/oder effektgebenden Mehrschichtlackierungen.

Insbesondere im Bereich der Automobillackierung wird aber an das Erscheinungsbild der folienseitigen Oberflächen der Formteile eine Vielzahl von Anforderungen gestellt (vgl. z. B. das Europäische Patent EP 0 352 298 B1, Seite 15, Zeile 42 bis Seite 17, Zeile 40).

Mit den im Stand der Technik vorgeschlagenen Lösungen können diese im Bereich der Automobillackierung üblichen Anforderungen aber nur unzureichend erfüllt werden. Außerdem sind die im Stand der Technik vorgeschlagenen Lösungen zum Teil im Hinblick auf den für die verwendeten strahlenvernetzbaren Klarlacke einzustellenden Wert der Glasübergangstemperatur sogar widersprüchlich.

Aus der WO 03/018214 ist nun ein Verfahren der eingangs genannten Art zur Herstellung von mit einer Beschichtung versehenen Folien bekannt, bei dem als transparentes Beschichtungsmittel strahlenhärtbare Beschichtungsmittel, insbesondere auf Basis von Polyurethanacrylaten, eingesetzt werden. Angaben über den Gehalt der Polyurethanacrylate an Verzweigungspunkten und an cyclischen Bausteinen, Allophanat-, Carbamat-, Harnstoff-, Amid- oder Biuretgruppen o.ä. sind in der Schrift aber nicht enthalten.

Die bei diesem Verfahren erhaltenen noch nicht endvernetzten transparenten Beschichtungen (KT) weisen eine verbesserungsbedürftige Handhabbarkeit im ungehärteten Zustand auf. Auch die endvernetzten transparenten Beschichtungen (KE) weisen noch verbesserungsbedürftige Eigenschaften auf. So kann es aufgrund der für die Folien notwendigen hohen Schichtdicken der transparenten und pigmentierten Beschichtungen zu Problemen, wie insbesondere Kocherbildung beim Trocknen, kommen.

Weiterhin ist aus der EP-A-819 516 ein Verfahren zur Herstellung von Formteilen bekannt, bei dem eine mit einer Beschichtung versehene Folie in ein Formwerkzeug eingelegt, das Formwerkzeug geschlossen und mit einem Kunststoffmaterial (KM) in Berührung gebracht und das Kunststoffmaterial (KM) verfestigt wird, wobei das Verfahren dadurch gekennzeichnet ist, dass das Beschichtungsmaterial vor dem Einbringen des Kunststoffmaterials nur teilvernetzt und erst während und/oder nach dem Einbringen des Kunststoffmaterials (KM) endvernetzt wird. Bevorzugt werden bei dem Verfahren strahlenvernetzbare Beschichtungsmittel mit einer Glasübergangstemperatur unterhalb 40 °C, insbesondere auf Basis von Urethanen, eingesetzt. Nähere Angaben zu der Zusammensetzung geeigneter Beschichtungsmittel sind jedoch nicht enthalten.

Aus der EP-B-1 047 556 ist ein Verfahren zur Herstellung beschichteter Lackfolien bekannt, bei dem es wesentlich ist, dass die pigmentierte Beschichtung eine höhere Reißdehnung hat als die transparente Beschichtung. Aus der WO02/00448 und der WO 00/51798 sind außerdem Verfahren zur Herstellung beschichteter Lackfolien bekannt, bei denen die über der transparenten Beschichtung angeordneten Schutzfolien wesentlich sind.

Als transparentes Beschichtungsmittel zur Herstellung der Folien werden in diesen Schriften insbesondere Beschichtungsmittel auf Fluorpolymer-Basis verwendet, während die Verwendung von strahlenhärtbaren Beschichtungsmitteln nicht beschrieben ist. Die mit diesen Verfahren erhaltenen Folien weisen daher ebenfalls nur unbefriedigende Eigenschaften, insbesondere eine unzureichende Kratzfestigkeit, auf. Außerdem ist auch aus ökologischen Gründen die Verwendung von Fluorpolymeren nachteilig.

Aus der WO 00/39183 sind thermisch und mittels Strahlung härtbare, sogenannte Dual Cure, Beschichtungsmittel auf der Basis von Oligourethanacrylaten bekannt, die sich insbesondere durch eine niedrige Viskosität bei geringem Lösemittelgehalt der noch nicht gehärteten Beschichtungsmittel auszeichnen. Diese Beschichtungsmittel werden auch zur Beschichtung von Folien eingesetzt. Die transparenten Beschichtungsmittel müssen aber vor dem Weiterverarbeiten/Thermoformen bzw. Lagern der beschichteten Folien insbesondere mittels UV Strahlung vorgehärtet werden, um die geforderte Klebfreiheit und mechanische Belastbarkeit der beschichteten Folie zu gewährleisten. Die erhaltenen, vorvernetzten transparenten Beschichtungen weisen aber im Allgemeinen keine ausreichende Thermoformbarkeit mehr auf.

Ferner ist aus der WO 00/63015 ein Verfahren zur Herstellung von Formteilen bekannt, bei dem auf eine thermoplastische Trägerfolie ein pigmentiertes Beschichtungsmittel (P) und hierauf ein transparentes Beschichtungsmittel (K) aufgebracht wird. Das eingesetzte vernetzbare Beschichtungsmittel (K) besteht aus einer strahlenvernetzbaren Masse, die ein Bindemittel mit einer Glasübergangstemperatur oberhalb 40° C enthält. Die bei diesem Verfahren erhaltenen endvernetzten transparenten Beschichtungen (KE) weisen jedoch unbefriedigende Eigenschaften auf. Insbesondere wird eine unzureichende Vernetzung der transparenten Beschichtung (KE) erhalten.

Darüber hinaus werden bei dem in der WO 00/63015 beschriebenen Verfahren als pigmentiertes Beschichtungsmittel thermoplastische Polymere, die Farbstoffe oder Pigmente in der Polymerschicht verteilt enthalten, eingesetzt. Aufgebracht wird diese farbgebende Schicht durch Extrusion, während die Verwendung von lösemittelhaltigen oder wäßrigen, pigmentierten Beschichtungsmitteln und deren Applikationsverfahren nicht beschrieben sind.

Schließlich sind aus der unveröffentlichten Patentanmeldung DE 102004053247.8-43 sowie aus der unveröffentlichten Patentanmeldung DE 102004053245.1-43 Verfahren zur Herstellung von Formteilen bekannt, bei dem auf eine Trägerfolie zunächst ein pigmentiertes Beschichtungsmittel (P) und auf dieses dann ein transparentes Beschichtungsmittel (K) appliziert wird. Verfahren zur Herstellung von Lackfolien, bei denen zunächst das transparente Beschichtungsmittel (K) auf eine Trägerfolie (T) appliziert und getrocknet wird, ehe dann das pigmentierte Beschichtungsmittel (P) auf die getrocknete transparente Beschichtung (KT) aufgebracht wird, sind in diesen Schriften aber nicht beschrieben.

### Aufgabe

Der vorliegenden Erfindung lag daher die Aufgabe zugrunde, ein Verfahren zur Herstellung von eine Beschichtung aufweisenden Folien zur Verfügung zu stellen, bei dem einerseits eine ausreichende Vernetzung der Beschichtungsmittel (K) gewährleistet ist. Andererseits darf aber auch die noch nicht endvernetzte Beschichtung (KT) nicht mehr fließen und bei der Weiterverarbeitung, insbesondere bei der Applikation der pigmentierten Beschichtungsmittel, nicht an den Vorrichtungen kleben oder durch sie geprägt werden. Außerdem muß die Abziehbarkeit der Folie (T) von der Beschichtung (KT) ohne Auftreten von Markierungen auf der Beschichtung (KT) gewährleistet sein.

Weiterhin sollen die Folien bei Verwendung zur Herstellung von Formteilen, insbesondere bei Verwendung der Formteile in der Automobilindustrie, in ihrem folienseitigen Erscheinungsbild den Anforderungen an eine sogenannte Class-A-Oberfläche genügen.

Außerdem sollen die Formteile in ihrem folienseitigen Erscheinungsbild die üblicherweise an eine Automobillackierung gestellten Anforderungen erfüllen (vgl. das Europäische Patent EP 0 352 298 B1, Seite 15, Zeile 42 bis Seite 17, Zeile 40). So darf insbesondere sowohl die Witterungsbeständigkeit als auch die Chemikalienbeständigkeit der endvernetzten transparenten Beschichtung (KE) nicht schlechter sein als die herkömmlicher Automobilklarlackschichten. Schließlich sollte die endvernetzte Beschichtung (KE) eine ausreichende Kratzfestigkeit aufweisen.

### Lösung der Aufgabe

Diese Aufgabe wird überraschenderweise durch ein Verfahren der eingangs genannten Art gelöst, das dadurch gekennzeichnet ist, dass
die radikalisch vernetzbare Komponente (KK)
(iv) im Mittel pro Molekül > 1, bevorzugt ≥ 1,4, besonders bevorzugt >2 Verzweigungspunkte,
(v) 5- 50 Gew. -%, vorzugsweise 10 - 40 Gew. -%, besonders bevorzugt 15 - 30 Gew. -%, jeweils bezogen auf das Gewicht der Komponente (KK), cyclische Strukturelemente und
(vi) mindestens ein aliphatisches Strukturelement mit mindestens 6 C-Atomen in der Kette aufweist und
(vii) Carbamat- und/oder Biuret- und/oder Allophanat- und/oder Harnstoff- und/oder Amidgruppen enthält.

Gegenstand der vorliegenden Erfindung sind außerdem auch die mittels des Verfahrens erhältlichen, eine Beschichtung (B) aufweisenden Folien (F) sowie die Verwendung der Folien (F) zur Herstellung von Formteilen.

### Vorteile der Erfindung

Es ist überraschend und war nicht vorhersehbar, dass durch Verwendung der speziellen Komponente (KK) in den vernetzbaren Beschichtungsmitteln (K) Beschichtungen erhalten werden, bei denen einerseits die noch nicht endvernetzte Beschichtung (KT) nicht mehr fließt und bei der Weiterverarbeitung eine ausreichende mechanische Stabilität aufweist, also nicht geprägt wird und nicht klebt und dabei andererseits bei der Endhärtung eine ausreichende Vernetzung der Beschichtungsmittel (K) gegeben ist. Außerdem ist die Abziehbarkeit der Folie (T) von der Beschichtung (KT) ohne Auftreten von Markierungen auf der Beschichtung (KT) gewährleistet.

Mit dem erfindungsgemäßen Verfahren werden somit Formteile zur Verfügung gestellt, die in ihrem folienseitigen Erscheinungsbild Class-A-Oberflächen gewährleisten und die üblicherweise an eine Automobillackierung gestellten Anforderungen erfüllen (vgl. das Europäische Patent EP 0 352 298 B1, Seite 15, Zeile 42 bis Seite 17, Zeile 40). So ist insbesondere sowohl die Witterungsbeständigkeit als auch die Chemikalienbeständigkeit der endvernetzten transparenten Beschichtung (KE) nicht schlechter als die herkömmlicher Automobilklarlackschichten. Schließlich weist die endvernetzte Beschichtung (KE) auch eine ausreichende Kratzfestigkeit auf.

### Ausführliche Beschreibung der Erfindung

### Die bei dem erfindungsgemäßen Verfahren eingesetzten Materialien

### Die eine Beschichtung (B) aufweisende Folie (F)

### Vernetzbares Beschichtungsmittel (K)

Es ist erfindungswesentlich, dass die im vernetzbaren Beschichtungsmittel (K) enthaltene radikalisch vernetzbare Komponente (KK) ein oder mehrere Oligourethan(meth)acrylate und/oder ein oder mehrere Polyurethan(meth)acrylate enthält.

Hier und im Folgenden wird dabei unter einem Oligomer eine Verbindung verstanden, welche im Allgemeinen im Mittel 2 bis 10 Grundstrukturen oder Monomereinheiten aufweist. Unter einem Polymeren wird dagegen eine Verbindung verstanden, welche im Allgemeinen im Mittel mehr als 10 Grundstrukturen oder Monomereinheiten aufweist. Mischungen bzw. stoffliche Gesamtheiten dieser Art werden von der Fachwelt auch als Bindemittel oder Harze bezeichnet.

Im Unterschied dazu ist hier und im Folgenden unter einer niedermolekularen Verbindung eine Verbindung zu verstehen, welche sich im Wesentlichen nur von einer Grundstruktur oder einer Monomereinheit ableitet.

Bevorzugt enthält die radikalisch vernetzbare Komponente (KK) mindestens 50 Gew. -%, besonders bevorzugt mindestens 70 Gew. -% und ganz besonders bevorzugt mindestens 80 Gew. -%, jeweils bezogen auf den Festkörpergehalt der Komponente (KK), eines oder mehrerer Oligourethan(meth)acrylate und/oder eines oder mehrerer Polyurethan(meth)-acrylate. Insbesondere besteht die radikalisch vernetzbare Komponente zu 100% aus einem oder mehreren Oligourethan(meth)acrylaten und/- oder einem oder mehreren Polyurethan(meth)acrylaten.

Bevorzugt enthält die radikalisch vernetzbare Komponente (KK) außerdem maximal 50 Gew. -%, besonders bevorzugt maximal 30 Gew. -% und ganz besonders bevorzugt maximal 20 und insbesondere keine weiteren radikalisch vernetzbaren Bestandteile.

Bevorzugt enthält dabei die radikalisch vernetzbare Komponente (KK) weniger als 5 Gew. -%, bevorzugt weniger als 1 Gew. -%, jeweils bezogen auf das Gewicht der Komponente (KK), und insbesondere im wesentlichen keine nachweisbaren, freien Isocyanatgruppen.

Außerdem ist es bevorzugt, dass die im vernetzbaren Beschichtungsmittel (K) enthaltene radikalisch vernetzbare Komponente (KK) eine Mischung verschiedener Oligo- und/oder Polyurethan(meth)acrylate, die auch unterschiedliche Doppelbindungsgehalte, Molekulargewichte, Doppelbindungsäquivalentgewichte, Gehalt an Verzweigungspunkten und Gehalt an cyclischen sowie längerkettigen aliphatischen Strukturelementen und unterschiedlichen Gehalt an Carbamat-, Biuret-, Allophanat-, Amid- und/oder Harnstoffgruppen aufweisen können, enthält.

Diese Mischung kann dabei dadurch erhalten werden, dass unterschiedliche Oligo- bzw. Polyurethan(meth)acrylate gemischt werden, oder dass bei der Herstellung eines entsprechenden Oligo- bzw. Polyurethan(meth)acrylates gleichzeitig unterschiedliche Produkte entstehen.

Neben den Urethan(meth)acrylaten kommen als weitere radikalisch vernetzbare Bestandteile der Komponente (KK) Monomere, bevorzugt aber Oligomere und/oder Polymere, insbesondere Polyester(meth)-acrylate, Epoxy(meth)acrylate, (meth)acrylfunktionelle (Meth)Acrylcopolymere, Polyether(meth)acrylate, ungesättigte Polyester, Amino-(meth)acrylate, Melamin(meth)acrylate und/oder Silikon(meth)acrylate , bevorzugt Polyester(meth)acrylate und/oder Epoxy(meth)acrylate und/oder Polyether(meth)acrylate, in Betracht. Bevorzugt sind dabei Polymere, die zusätzlich zu den Doppelbindungen noch Hydroxyl-, Carboxyl-, Amino- und/oder Thiol-Gruppen enthalten.

Zur Erzielung einer guten Vernetzung werden bevorzugt radikalisch vernetzbare Komponenten (KK) mit einer hohen Reaktivität der funktionellen Gruppen eingesetzt, besonders bevorzugt radikalisch vernetzbare Komponenten (KK), die als funktionelle Gruppen acrylische Doppelbindungen enthalten.

Die Urethan(meth)acrylate können in dem Fachmann bekannter Weise aus isocyanatgruppenhaltiger Verbindung und mindestens einer Verbindung, die gegenüber Isocyanatgruppen reaktive Gruppen enthält, durch Mischen der Komponenten in beliebiger Reihenfolge, gegebenenfalls bei erhöhter Temperatur, hergestellt werden.

Bevorzugt wird dabei die Verbindung, die gegenüber Isocyanatgruppen reaktive Gruppen enthält, zu der isocyanatgruppenhaltigen Verbindung zugegeben, bevorzugt in mehreren Schritten.

Insbesondere werden die Urethan(meth)acrylate erhalten, indem das Di- oder Polyisocyanat vorgelegt wird und daraufhin mindestens ein Hydroxyalkyl(meth)acrylat oder Hydroxyalkylester anderer ethylenisch ungesättigter Carbonsäuren zugegeben wird, wodurch zunächst ein Teil der Isocyanatgruppen umgesetzt wird. Nachfolgend wird ein Kettenverlängerungsmittel aus der Gruppe der Diole/Polyole und/oder Diamine/- Polyamine und/oder Dithiole/Polythiole und/oder Alkanolamine zugegeben und so die restlichen Isocyanatgruppen mit dem Kettenverlängerungsmittel umgesetzt.

Außerdem ist es möglich, die Urethan(meth)acrylate herzustellen durch Umsetzung eines Di- oder Polyisocyanates mit einem Kettenverlängerungsmittel und anschließende Umsetzung der restlichen freien Isocyanatgruppen mit mindestens einem ethylenisch ungesättigten Hydroxyalkylester.

Selbstverständlich sind auch sämtliche Zwischenformen dieser beiden Verfahren möglich. Beispielsweise kann ein Teil der Isocyanatgruppen eines Diisocyanates zunächst mit einem Diol umgesetzt werden, anschließend kann ein weiterer Teil der Isocyanatgruppen mit dem ethylenisch ungesättigten Hydroxyalkylester und im Anschluß hieran können die restlichen Isocyanatgruppen mit einem Diamin umgesetzt werden.

In der Regel wird die Reaktion bei Temperaturen zwischen 5 und 100 °C, bevorzugt zwischen 20 bis 90 °C und besonders bevorzugt zwischen 40 und 80°C und insbesondere zwischen 60 und 80 °C durchgeführt.

Bevorzugt wird dabei unter wasserfreien Bedingungen gearbeitet. Wasserfrei bedeutet dabei, dass der Wassergehalt im Reaktionssystem nicht mehr als 5 Gew. -% beträgt, bevorzugt nicht mehr als 3 Gew. -% und besonders bevorzugt nicht mehr als 1 Gew. -%.

Um eine Polymerisation der polymerisationsfähigen Doppelbindungen zurückzudrängen, wird bevorzugt unter einem sauerstoffhaltigen Gas gearbeitet, besonders bevorzugt Luft oder Luft-Stickstoff-Gemische.

Als sauerstoffhaltiges Gas können bevorzugt Luft oder ein Gemisch aus Sauerstoff oder Luft und einem unter den Einsatzbedingungen inerten Gas verwendet werden. Als inertes Gas können Stickstoff, Helium, Argon, Kohlenmonoxid, Kohlendioxid, Wasserdampf, niedere Kohlenwasserstoffe oder deren Gemische verwendet werden.

Der Sauerstoffgehalt des sauerstoffhaltigen Gases kann beispielsweise zwischen 0,1 und 22 Vol. -%, bevorzugt von 0,5 bis 20 betragen, besonders bevorzugt 1 bis 15, ganz besonders bevorzugt 2 bis 10 und insbesondere 4 bis 10 Vol. -%. Selbstverständlich können, falls gewünscht, auch höhere Sauerstoffgehalte eingesetzt werden.

Die Reaktion kann auch in Gegenwart eines inerten Solvens durchgeführt werden, z.B. Aceton, *Iso*-butyl-methylketon, Methylethylketon, Toluol, Xylol, Butylacetat oder Ethoxyethylacetat.

Durch Auswahl der Art und Menge an eingesetztem Di- und/oder Polyisocyanat, Kettenverlängerungsmittel und Hydroxyalkylester werden dabei die weiteren Kenngrößen der Urethan(meth)acrylate, wie z. B. Doppelbindungsgehalt, Doppelbindungsäquivalentgewicht, Gehalt an Verzweigungspunkten, Gehalt an cyclischen Strukturelementen, Gehalt an aliphatischen Strukturelementen mit mindestens 6 C-Atomen , an Biuret-, Allophanat-, Carbamat-, Harnstoff- bzw. Amidgruppen u. ä. gesteuert.

Durch die Auswahl der jeweils eingesetzten Mengen an Di- oder Polyisocyanat und Kettenverlängerungsmittel sowie durch die Funktionalität des Kettenverlängerungsmittels ist es ferner auch möglich, Urethan-(meth)acrylate herzustellen, die neben den ethylenisch ungesättigten Doppelbindungen noch andere funktionelle Gruppen, beispielsweise Hydroxyl-, Carboxylgruppen, Aminogruppen und/oder Thiolgruppen o.ä. enthalten. Bevorzugt enthalten dabei die Urethan(meth)acrylate noch Hydroxyl- und/oder Carboxylgruppen.

Insbesondere, wenn die Urethan(meth)acrylate in wässrigen Beschichtungsmitteln (K) eingesetzt werden sollen, wird ein Teil der in den Reaktionsgemischen vorhandenen freien Isocyanatgruppen noch mit Verbindungen umgesetzt, die eine isocyanatreaktive Gruppe, vorzugsweise ausgewählt aus der Gruppe, bestehend aus Hydroxyl-, Thiol- und primären und sekundären Aminogruppen, insbesondere Hydroxylgruppen, sowie mindestens eine, insbesondere eine, Säuregruppe, vorzugsweise ausgewählt aus der Gruppe bestehend aus Carboxylgruppen, Sulfonsäuregruppen, Phosphorsäuregruppen und Phosphonsäuregruppen, insbesondere Carboxylgruppen, enthalten. Beispiele geeigneter Verbindungen dieser Art sind Hydroxyessigsäure, Hydroxypropionsäure oder Gamma-Hydroxybuttersäure, insbesondere Hydroxyessigsäure.

Die neben den Urethan(meth)acrylaten geeigneten Polyester(meth)-acrylate sind dem Fachmann prinzipiell bekannt. Sie sind durch verschiedene Methoden herstellbar. Beispielsweise kann Acrylsäure und/- oder Methacrylsäure direkt als Säurekomponente beim Aufbau der Polyester eingesetzt werden. Daneben besteht die Möglichkeit, Hydroxyalkylester der (Meth)Acrylsäure als Alkoholkomponente direkt beim Aufbau der Polyester einzusetzen. Bevorzugt werden die Polyester(meth)-acrylate aber durch Acrylierung von Polyestern hergestellt. Beispielsweise können zunächst hydroxylgruppenhaltige Polyester aufgebaut werden, die dann mit Acryl- oder Methacrylsäure umgesetzt werden. Es können auch zunächst carboxylgruppenhaltige Polyester aufgebaut werden, die dann mit einem Hydroxyalkylester der Acryl- oder Methacrylsäure umgesetzt werden. Nicht umgesetzte (Meth)Acrylsäure kann durch Auswaschen, Destillieren oder bevorzugt durch Umsetzen mit einer äquivalenten Menge einer Mono- oder Diepoxidverbindung unter Verwendung geeigneter Katalysatoren, wie z.B. Triphenylphosphin, aus dem Reaktionsgemisch entfernt werden. Bezüglich weiterer Einzelheiten zur Herstellung der Polyesteracrylate sei insbesondere auf die DE-OS 33 16 593 und die DE-OS 38 36 370 sowie auch auf die EP-A-54 105, die DE-AS 20 03 579 und die EP-B-2866 verwiesen.

Auch die weiterhin geeigneten Polyether(meth)acrylate sind dem Fachmann ebenfalls prinzipiell bekannt. Sie sind durch verschiedene Methoden herstellbar. Beispielsweise können hydroxylgruppenhaltige Polyether, die mit Acrylsäure und/oder Methacrylsäure verestert werden, durch Umsetzung von zwei- und/oder mehrwertigen Alkoholen mit verschiedenen Mengen an Ethylenoxid und/oder Propylenoxid nach gut bekannten Methoden (vgl. z.B. Houben-Weyl, Band XIV, 2, Makromolekulare Stoffe II, (1963)) erhalten werden. Einsetzbar sind auch Polymerisationsprodukte des Tetrahydrofurans oder Butylenoxids.

Durch Auswahl der Art und Menge an eingesetzter Alkohol- und Säurekomponente werden dabei die weiteren Kenngrößen der Polyether-(meth)acrylate und Polyester(meth)acrylate, wie z. B. Doppelbindungsgehalt, Doppelbindungsäquivalentgewicht, Gehalt an Verzweigungspunkten, Gehalt an cyclischen Strukturelementen, Gehalt an aliphatischen Strukturelementen mit mindestens 6 C-Atomen u. ä. gesteuert.

Ferner sind auch Epoxy(meth)acrylate dem Fachmann wohl bekannt und brauchen daher nicht näher erläutert zu werden. Sie werden üblicherweise hergestellt durch Anlagerung von Acrylsäure an Epoxidharze, beispielsweise an Epoxidharze auf Basis Bisphenol A oder andere handelsübliche Epoxidharze.

Weiterhin ist es erfindungswesentlich, dass die radikalisch vernetzbare Komponente (KK) einen Doppelbindungsgehalt von 1,0 bis 5,0 mol Doppelbindungen pro 1.000 g reaktive Komponente (KK), vorzugsweise einen Doppelbindungsgehalt von 1,5 bis 4,0 mol Doppelbindungen pro 1.000 g reaktive Komponente (KK) und besonders bevorzugt einen Doppelbindungsgehalt von mehr als 2,0 bis 3,5 mol Doppelbindungen pro 1.000 g reaktive Komponente (KK), aufweist, wobei die Werte jeweils bezogen sind auf das Gewicht der radikalisch vernetzbaren Komponente (KK), aber selbstverständlich ohne nichtreaktive Komponenten, wie z. B. Lösemittel, Wasser oder Additive.

Der Doppelbindungsgehalt der Komponente (KK) hängt dabei - wie dem Fachmann bekannt - neben dem Gehalt an Doppelbindungen pro Molekül insbesondere mit dem zahlenmittleren Molekulargewicht der Komponente (KK) zusammen.

Mit abnehmendem Doppelbindungsgehalt der Komponente (KK) wird die Eigenschaft verbessert, dass die getrocknete, aber noch nicht endvernetzte transparente Beschichtung (KT) nicht mehr fließt und von einer ggf. aufgebrachten Schutzfolie nicht mehr geprägt wird.

Gleichzeitig nimmt mit abnehmendem Doppelbindungsgehalt der Komponente (KK) im Allgemeinen die Vernetzungsdichte der endvernetzten transparenten Beschichtung (KE) ab.

Wie dem Fachmann bekannt ist, kann dabei das Molekulargewicht und der Doppelbindungsgehalt über Art und Menge der eingesetzten Aufbaukomponenten sowie über die Reaktionsbedingungen eingestellt werden.

Es ist ferner bevorzugt, dass die radikalisch vernetzbare Komponente (KK) im Mittel mehr als 1, vorzugsweise mindestens 2 ethylenisch ungesättigte Doppelbindungen pro Molekül aufweist. Besonders bevorzugt weist die radikalisch vernetzbare Komponente (KK) mehr als 2,0 bis maximal 20,0, bevorzugt 4,0 bis 17,0 und ganz besonders bevorzugt 6,0 bis 14,0 Doppelbindungen pro Molekül auf.

Im Allgemeinen enthält die radikalisch vernetzbare Komponente (KK) nicht mehr als 10 Gew. -% an Verbindungen, die nur eine härtbare Gruppe aufweisen, bevorzugt nicht mehr als 7,5 Gew.- %, besonders bevorzugt nicht mehr als 5 Gew.- %, ganz besonders bevorzugt nicht mehr als 2,5 Gew.- %, insbesondere nicht mehr als 1 Gew.- % und speziell 0 Gew.- %.

Wie auch mit steigendem Doppelbindungsgehalt der radikalisch vernetzbaren Komponente (KK) steigt mit steigendem Doppelbindungsgehalt pro Molekül der radikalisch vernetzbaren Komponente (KK) im Allgemeinen die Vernetzungsdichte der endvernetzten transparenten Beschichtung (KE). Gleichzeitig nimmt jedoch im Allgemeinen mit steigendem Doppelbindungsgehalt pro Molekül der radikalisch vernetzbaren Komponente (KK) die Reißdehnung der endvernetzten transparenten Beschichtung (KE) ab, d.h. das System wird spröder. Daher weist die endvernetzte transparente Beschichtung (KE) mit steigendem Doppelbindungsgehalt pro Molekül eine erhöhte Tendenz zu Spannungsrissen nach der UV-Härtung auf.

Die Einführung der Doppelbindungen in die Komponente (KK) erfolgt dabei wie oben beschrieben im Allgemeinen durch Umsetzung von einem oder mehreren ethylenisch ungesättigten Hydroxyalkylestern mit den Isocyanatgruppen des Isocyanates bzw. des Isocyanatpräpolymeren im Falle der Urethan(meth)acrylate bzw. mit den Säuregruppen des Polyesters im Falle der Polyester(meth)acrylate. Ebenso können wie oben beschrieben die Ausgangsoligo- bzw. Ausgangspolymeren, wie z.B. Polyester, Polyether, Epoxide und Acrylatpolymere, mit Acryl- und/oder Methacrylsäure und/oder einer anderen ethylenisch ungesättigten Säure umgesetzt werden.

Beispiele für geeignete ethylenisch ungesättigte Hydroxyalkylester sind Hydroxyalkylester der Acryl- und Methacrylsäure, der Malein- und Fumarsäure, der Croton- und Isocrotonsäure und der Vinylessigsäure, bevorzugt ethylenisch ungesättigte Hydroxyalkylester der Acrylsäure. Besonders bevorzugt werden die ethylenisch ungesättigten Hydroxyethyl- und/oder Hydroxypropyl- und/oder Hydroxybutyl- und/oder Hydroxypentyl- und/oder Hydroxyhexylester, ganz besonders bevorzugt ethylenisch ungesättigte Hydroxyethylester oder ethylenisch ungesättigte Hydroxybutylester oder ethylenisch ungesättigte Hydroxyethylester zusammen mit ethylenisch ungesättigten Hydroxybutylestern, der genannten ungesättigten Säuren, insbesondere der Acrylsäure, eingesetzt.

Selbstverständlich können zur Einführung der Doppelbindungen in die Komponente (KK) auch Hydroxyalkylester mit mehr als einer Doppelbindung pro Molekül eingesetzt werden, wie z.B. Pentaerythritdi-und Pentaerythrittri-acrylat o.ä. Auch können handelsübliche Mischungen von Pentaerythrit-tri-/tetra-acrylat eingesetzt werden, wie z.B. das von der UCB Chemicals unter der Bezeichnung PETIA vertriebene Produkt.

Ganz besonders bevorzugt wird zur Einführung der Doppelbindungen in die Komponente (KK) 2-Hydroxyethylacrylat und/oder 4-Hydroxybutylacrylat und/oder Pentaerythrittriacrylat eingesetzt.

Dabei hat die zur Einführung der Doppelbindungen eingesetzte Verbindung je nach ihrer Struktur unter Umständen selbst Einfluss die Eigenschaften der Beschichtung, da neben dem Doppelbindungsgehalt unter Umständen auch andere Größen, wie z.B. der Urethangruppengehalt, verändert werden. Wird beispielsweise der Doppelbindungsgehalt der Komponente (KK) dadurch erhöht, dass ein Teil des Kettenverlängerungsmittels durch Hydroxyethylacrylat ersetzt wird, so wird der Urethangruppengehalt entsprechend dem Massenverhältnis von Kettenverlängerungsmittel zu Hydroxyethylacrylat verändert. Wird dagegen der Doppelbindungsgehalt der Komponente (KK) beispielsweise dadurch erhöht, dass anstelle von Hydroxyethylacrylat Hydroxyalkylester mit mehr als einer Doppelbindung pro Molekül, wie z.B. Pentaerythrittriacrylat und/oder Pentaerythrittetraacrylat, eingesetzt werden, so wird der Urethangruppengehalt moderat erniedrigt.

Es ist ferner erfindungswesentlich, dass die radikalisch vernetzbare Komponente (KK) ein zahlenmittleres Molekulargewicht von 1.000 bis 50.000 g/mol, bevorzugt von 2.000 bis 6.000 g/mol und besonders bevorzugt von 2.200 bis 5.000 g/mol, aufweist.

Je höher dabei das Molekulargewicht der reaktiven Komponente (KK) ist, desto niedriger ist im Allgemeinen die Vernetzungsdichte der endvernetzten transparenten Beschichtung (KE).

Gleichzeitig ist im Allgemeinen die Beständigkeit der noch nicht endvernetzten transparenten Beschichtung (KT) um so höher, je höher dabei das Molekulargewicht der reaktiven Komponente (KK) ist.

Weiterhin ist es erfindungswesentlich, dass die radikalisch vernetzbare Komponente (KK) im Mittel pro Molekül > 1, bevorzugt ≥ 1,4, besonders bevorzugt >2 Verzweigungspunkte aufweist.

Bei einer Erniedrigung der mittleren Anzahl an Verzweigungspunkten pro Molekül in der Komponente (KK) nimmt im Allgemeinen die Kratzfestigkeit der endvernetzten transparenten Beschichtung (KE) ab. Gleichzeitig nimmt mit Erniedrigung der mittleren Anzahl an Verzweigungspunkten pro Molekül im Allgemeinen die Widerstandsfähigkeit der getrockneten, aber noch nicht endvernetzten transparenten Beschichtung (KT) ab.

Die mittlere Anzahl an Verzweigungspunkten pro Molekül in der Komponente (KK) wird im Allgemeinen durch den Gehalt an für den Aufbau der Komponente (KK) eingesetzten Verbindungen mit einer Funktionalität größer 2, insbesondere mit einer Funktionalität von mindestens 3, eingestellt.

Die Verzweigungspunkte der radikalisch vernetzbaren Komponente (KK) werden bevorzugt über die Verwendung von Isocyanaten mit einer Funktionalität größer 2, insbesondere mit einer Funktionalität von mindestens 3, eingeführt.

Besonders bevorzugt werden die Verzweigungspunkte eingeführt, indem zur Herstellung der in der radikalisch vernetzbaren Komponente (KK) eingesetzten Oligo- und/oder Polyurethan(meth)acrylate trimere und/oder polymere Isocyanate, insbesondere Isocyanurate, und/oder Addukte bzw. Präpolymere mit einer Isocyanatfunktionalität größer 2, insbesondere Allophanate und/oder Biurete, verwendet werden. Ganz besonders bevorzugt werden die Verzweigungspunkte über die Verwendung eines oder mehrerer Isocyanurate und/oder eines oder mehrerer Biurete eingeführt.

Es ist aber auch möglich, beim Aufbau der radikalisch vernetzbaren Komponente (KK) Alkohole, Thiole oder Amine mit einer Funktionalität größer als 2 einzusetzen, beispielsweise durch die Verwendung von Pentaerythrit, Dipentaerythrit, Trimethylolethan, Trimethylolpropan, Ditrimethylolpropan und Trishydroxyethylisocyanurat.

Es ist außerdem erfindungswesentlich, dass die radikalisch vernetzbare Komponente (KK) 5- 50 Gew. -%, vorzugsweise 10 - 40 Gew. -%, besonders bevorzugt 15 - 30 Gew. -%, jeweils bezogen auf das Gewicht der Komponente (KK) (aber selbstverständlich ohne nichtreaktive Komponenten, wie z. B. Lösemittel, Wasser oder Additive) cyclische Strukturelemente aufweist.

Mit steigendem Gehalt an cyclischen Strukturelementen der Komponente (KK) wird im Allgemeinen die Eigenschaft verbessert, dass die getrocknete, aber noch nicht endvernetzte transparente Beschichtung (KT) nicht mehr fließt und von einer ggf. aufgebrachten Schutzfolie nicht mehr geprägt wird.

Mit steigendem Gehalt an cyclischen Strukturelementen der Komponente (KK) nimmt im Allgemeinen auch die Chemikalienbeständigkeit, die Witterungsbeständigkeit sowie die Kratzfestigkeit der endvernetzten transparenten Beschichtung (KE) zu. Weiterhin nimmt mit einem zu hohen Gehalt an cyclischen Strukturelementen der Komponente (KK) die Reißdehnung der endvernetzten Beschichtung (KE) ab und damit die Sprödigkeit zu.

Es ist bevorzugt, dass die radikalisch vernetzbare Komponente (KK) als cyclische Strukturelemente monocyclische Strukturelemente mit 4 bis 8, besonders bevorzugt mit 5 bis 6 Ringgliedern, und/oder polycyclische Strukturelemente mit 7 bis 18 Ringgliedern, besonders bevorzugt di- und/oder tricyclische Strukturelemente mit bevorzugt 10 bis 12, ganz besonders bevorzugt Tricyclodekanringe, aufweist und/oder dass die cyclischen Strukturelemente substituiert sind.

Die cyclischen Struktureinheiten können sowohl cycloaliphatisch, heterocyclisch als auch aromatisch sein, wobei die Struktureinheiten bevorzugt cycloaliphatisch und/oder heterocyclisch sind. Insbesondere wird eine Kombination aus cycloaliphatischen und heterocyclischen Struktureinheiten eingesetzt.

Die heterocyclischen Struktureinheiten können in der Kette sein - wie z. B. bei Verwendung von Uretdionen - und/oder die Verzweigungspunkte bilden - wie z. B. bei Verwendung von Isocyanuraten. Die cycloaliphatischen Struktureinheiten können ebenfalls in der Kette sein - wie z. B. bei Verwendung von cycloaliphatischen Diolen, wie hydriertem Bisphenol-A, zum Aufbau der Urethane - und/oder die Verzweigungspunkte bilden. Besonders bevorzugt bilden die heterocyclischen Struktureinheiten aber die Verzweigungspunkte, während die cycloaliphatischen Struktureinheiten in der Kette sind.

Bevorzugte cycloaliphatische Strukturelemente sind ggf. substituierte Cyclopentanringe, ggf. substituierte Cyclohexanringe, ggf. substituierte Dicycloheptanringe, ggf. substituierte Dicyclooctanringe und/oder ggf. substituierte Dicyclodekanringe und/oder ggf. substituierte Tricyclodekanringe, insbesondere ggf. substituierte Tricyclodekanringe und/oder ggf. substituierte Cyclohexanringe.

Die heterocyclischen Struktureinheiten können sowohl gesättigt, ungesättigt als auch aromatisch sein. Bevorzugt werden gesättigte heterocyclische Struktureinheiten eingesetzt.

Die Heteroatome sind bevorzugt ausgewählt aus der Gruppe Stickstoff und/oder Sauerstoff und/oder Schwefel und/oder Phosphor und/oder Silicium und/oder Bor, besonders bevorzugt Stickstoff. Die Anzahl der Heteroatome pro Ring beträgt üblicherweise 1 bis 18, bevorzugt 2 bis 8, und ganz besonders bevorzugt 3.

Besonders bevorzugt werden als heterocyclische Struktureinheiten Isocyanuratringe und/oder Uretdione und/oder ggf. substituierte Triazinringe, ganz besonders bevorzugt Isocyanuratringe, eingesetzt.

Zur Einführung der cyclischen Strukturelemente sind prinzipiell auch aromatische Strukturelemente geeignet, wobei bevorzugt der Gehalt an aromatischen Strukturelementen maximal 10 Gew. -%, bevorzugt maximal 5 Gew. -%, und besonders bevorzugt maximal 2 Gew. -%, jeweils bezogen auf das Gewicht der Komponente (KK), beträgt. Aromatische Strukturelemente haben nämlich im Allgemeinen nachteilige Auswirkungen auf die Witterungsbeständigkeit der resultierenden endvernetzten transparenten Beschichtung (KE), so dass der Gehalt an aromatischen Strukturelementen deswegen häufig begrenzt ist.

Die Einführung der cyclischen Strukturelemente in die reaktive Komponente (KK) erfolgt durch Verwendung entsprechender Verbindungen mit cyclischen Strukturelementen zur Herstellung der Komponente (KK). Insbesondere können zur Herstellung der Komponente (KK) Di- und/oder Polyisocyanate mit cyclischen Strukturelementen und/oder Di- bzw. Polyole, Di- bzw. Polyamine, Di- bzw. Polythiole mit cyclischen Strukturelementen eingesetzt werden. Besonders bevorzugt werden Di- und/oder Polyole und/oder Di- und/oder Polyisocyanate mit cyclischen Strukturelementen eingesetzt.

Zur Herstellung der in der radikalisch vernetzbaren Komponente (KK) eingesetzten Oligo- und/oder Polyurethan(meth)acrylate werden daher bevorzugt zumindest anteilig als Isocyanatkomponente Isocyanurate von Di- und/oder Polyisocyanaten, die üblicherweise in der Lackindustrie eingesetzt werden, verwendet. Anstelle oder zusammen mit diesen Isocyanuraten können Präpolymere und/oder Addukte, insbesondere Biurete und/oder Allophanate und/oder Uretdione, von Di- und/oder Polyisocyanaten, die üblicherweise in der Lackindustrie eingesetzt werden, verwendet werden. Besonders bevorzugt werden Isocyanurate und/oder Biurete und/oder Allophanate und/oder Uretdione von aliphatischen und/oder cycloaliphatischen Isocyanaten eingesetzt. Daneben ist es ferner möglich, alleine oder in Kombination mit den oben aufgeführten Isocyanuraten und/oder Biureten und/oder Allophanaten und/oder Uretdionen, cycloaliphatische Di- und/oder Polyisocyanate einzusetzen.

(Cyclo)Aliphatische Di- und/oder Polyisocyanate, die üblicherweise in der Lackindustrie eingesetzt werden, sind beispielsweise Hexamethylendiisocyanat, Octamethylendiisocyanat, Decamethylendiisocyanat, Dodecamethylendiisocyanat, Tetradecamethylendiisocyanat, Trimethylhexandiisocyanat, Tetramethylhexandiisocyanat, Isophorondiisocyanat, 2-Isocyanatopropylcyclohexylisocyanat, Dicyclohexylmethan-2,4'-diisocyanat, Dicyclohexylmethan-4,4'-diisocyanat, 1,4- oder 1,3-Bis(isocyanatomethyl)cyclohexan, 1,4- oder 1,3- oder 1,2-Diisocyanatocyclohexan, 2,4- oder 2,6-Diisocyanato-1-methylcyclohexan, Diisocyanate, abgeleitet von Dimerfettsäuren, wie sie unter der Handelsbezeichnung DDI 1410 von der Firma Henkel vertrieben werden, 1,8-Diisocyanato-4-isocyanatomethyl-oktan, 1,7-Diisocyanato-4-isocyanatomethyl-heptan oder 1-Isocyanato-2-(3-isocyanatopropyl)cyclohexan oder Mischungen aus diesen Polyisocyanaten.

Geeignet sind ferner auch Isocyanate, die aromatische Strukturelemente aufweisen, bei denen aber die Isocyanatgruppen zumindest teilweise an aliphatische und/oder cycloaliphatische Reste gebunden sind, insbesondere 1,3-Bis-(2-isocyanatopropyl-2-)benzol (TMXDI).

Besonders bevorzugt wird zur Herstellung der in der radikalisch vernetzbaren Komponente (KK) eingesetzten Oligo- und/oder Polyurethan-(meth)acrylate zumindest anteilig das Isocyanurat von (cyclo)aliphatischen Isocyanaten, insbesondere das Isocyanurat von Isophorondiisocyanat und/oder Hexamethylendiisocyanat eingesetzt. Ganz besonders bevorzugt wird eine Mischung aus dem Isocyanurat von Isophorondiisocyanat und/oder dem Isocyanurat von Hexamethylendiisocyanat und/oder dem Biuret von Hexamethylen-diisocyanurat und/oder 1,3-Bis(isocyanatomethyl)cyclohexan und/oder Dicyclohexylmethan-4,4'-diisocyanat eingesetzt.

Weiterhin geeignet sind die in der EP-B-1 144 476 auf Seite 4, Zeile 43, bis Seite 5, Zeile 31 beschriebenen höherfunktionellen Polyisocyanate auf Basis von Isocyanuraten, (dort a2.1 genannt), Uretdionen (dort a2.2 genannt), Biureten (dort a2.3 genannt), Urethan- und/oder Allophanatgruppen aufweisenden Polyisocyanaten (dort a2.4 genannt), Oxadiazintriongruppen aufweisende Polyisocyanate (dort a2.6 genannt) und Carbodiimid- oder Uretonimin-modifizierte Polyisocyanate (dort a.2.7 genannt).

Zur Herstellung der in der radikalisch vernetzbaren Komponente (KK) eingesetzten Oligomere und/oder Polymere, insbesondere der Oligo- und/oder Polyurethan(meth)acrylate, werden außerdem bevorzugt zumindest anteilig cycloaliphatische Di- bzw. Polyole und/oder cycloaliphatische Di- und/oder Polyamine, insbesondere cycloaliphatische Diole eingesetzt, wie beispielsweise Cyclohexandimethanol, 1,2-, 1,3-oder 1,4-Cyclohexandiol, Cyclooctandiol, hydriertes Bisphenol-A, hydriertes Bisphenol-F und Tricyclodecandimethanol.

Besonders bevorzugt wird zur Herstellung der in der radikalisch vernetzbaren Komponente (KK) eingesetzten Oligomere und/oder Polymere, insbesondere der Oligo- und/oder Polyurethan(meth)acrylate, hydriertes Bisphenol-A eingesetzt.

Wie bereits erwähnt, können cyclische Strukturelemente auch über die Verwendung aromatischer Strukturelemente eingeführt werden, beispielsweise über die anteilige Verwendung von aromatischen Isocyanaten bzw. Trimeren und/oder Präpolymeren und/oder Addukten von aromatischen Isocyanaten, wie z. B. von 1,2- 1,3- und 1,4-Benzoldiisocyanat, 2,4- und 2,6-Tolyulendiisocyanat, 4,4'-Biphenylendiisocyanat, Bis(4-isocyanatophenyl)methan, 2,2- Bis(4-isocyanatophenyl)propan und die stellungsisomeren Naphthalindiisocyanate, insbesondere die technischen Gemische von 2,4- und 2,6-Tolyulendiisocyat. Weitere Beispiele für geeignete aromatische Struktureinheiten sind Triazinringe.

Diese Struktureinheiten können beispielsweise über die Verwendung von Tris(Alkoxycarbonylamino)Triazinen gemäß der US-PS 4 939 213, der US-PS 5 084 541 und der EP-A-624 577 eingeführt werden. Ebenso können Derivate der genannten Verbindungen zum Einsatz kommen.

Es ist außerdem erfindungswesentlich, dass die radikalisch vernetzbare Komponente (KK) mindestens ein aliphatisches Strukturelement mit mindestens 6 C-Atomen, besonders bevorzugt mit 6 bis 18 C-Atomen, ganz besonders bevorzugt mit 6 C-Atomen, in der Kette aufweist.

Diese Strukturelemente wirken flexibilisierend auf die Komponente (KK). Mit steigendem Gehalt an aliphatischen Strukturelementen mit mindestens 6 C-Atomen in der Kette in der Komponente (KK) wird daher die Eigenschaft verschlechtert, dass die getrocknete, aber noch nicht endvernetzte transparente Beschichtung (KT) nicht mehr fließt und von einer ggf. aufgebrachten Schutzfolie nicht mehr geprägt wird.

Weiterhin ist die Chemikalienbeständigkeit der endvernetzten transparenten Beschichtung um so besser, je niedriger der Gehalt an aliphatischen Strukturelementen mit mindestens 6 C-Atomen in der Kette ist.

Bevorzugt weist die radikalisch vernetzbare Komponente (KK) 3 - 30 Gew. -%, vorzugsweise 5 - 25 Gew. -%, besonders bevorzugt 8 - 20 Gew. -%, jeweils bezogen auf das Gewicht der Komponente (KK) (aber selbstverständlich ohne nichtreaktive Komponenten, wie z. B. Lösemittel, Wasser oder Additive), aliphatische Strukturelemente mit mindestens 6 C-Atomen in der Kette auf.

Zur Einführung in die Komponente (KK) geeignet sind alle längerkettigen Kohlenwasserstoffketten.

Die Einführung dieses aliphatischen Strukturelementes mit mindestens 6 C-Atomen in der Kette in die reaktive Komponente (KK) erfolgt durch Verwendung entsprechender Verbindungen mit diesem aliphatischen Strukturelement mit mindestens 6 C-Atomen in der Kette zur Herstellung der Komponente (KK). Insbesondere können zur Herstellung der Urethan(meth)acrylate Di- und/oder Polyisocyanate und/oder Kettenverlängerungsmittel (Di- bzw. Polyole, Di- bzw. Polyamine, Di- bzw. Polythiole, Di- und/oder Polycarbonsäuren etc.) mit diesem aliphatischen Strukturelement mit mindestens 6 C-Atomen in der Kette eingesetzt werden. Besonders bevorzugt werden Di- und/oder Polyole und/oder Di- und/oder Polycarbonsäuren und/oder Di- und/oder Polyisocyanate mit diesem aliphatischen Strukturelement mit mindestens 6 C-Atomen in der Kette eingesetzt.

Geeignet sind beispielsweise dimere und/oder trimere Fettsäuren zur Modifizierung des Di- und/oder Polyisocyanates.

Besonders bevorzugt in die radikalisch vernetzbare Komponente (KK) eingeführt wird dieses aliphatische Strukturelement mit mindestens 6 C-Atomen in der Kette durch die Verwendung von entsprechend funktionalisierten Derivaten des Hexamethylens, insbesondere durch Verwendung von Verbindungen auf Basis von Hexamethylen, die zusätzlich noch mindestens 1, bevorzugt mindestens 2, Isocyanatgruppen oder OH- und/oder NH- und/oder SH- Gruppen aufweisen, bei der Herstellung der Oligo- und/oder Polyurethan(meth)acrylate.

Beispielsweise einsetzbar sind Hexamethylendiisocyanat und/oder isocyanatfunktionelle Tri- bzw. Polymere und/oder isocyanatfunktionelle Addukte des Hexamethylendiisocyanates, insbesondere das Biuret und/oder das Isocyanurat des Hexamethylendiisocyanates. Ferner einsetzbar sind auch das Hexamethylendiol und/oder das Hexamethylendiamin oder ähnliche Verbindungen. Möglich ist schließlich auch die Verwendung von Verbindungen, die außer mindestens 1 ethylenisch ungesättigten Doppelbindung und mindestens 1 reaktiven Gruppe, die gegenüber Isocyanatgruppen oder OH-Gruppen oder NH-Gruppen reaktiv ist, noch dieses aliphatische Strukturelement mit mindestens 6 C-Atomen in der Kette aufweist, wie z. B. Hydroxyhexylacrylat.

Entsprechend ist auch eine Flexibilisierung der Polyether(meth)acrylate und der Polyester(meth)acrylate ist beispielsweise dadurch möglich, dass entsprechende OH-funktionelle Praepolymere bzw. Oligomere (Polyether- oder Polyester-Basis) mit längerkettigen, aliphatischen Dicarbonsäuren, insbesondere aliphatischen Dicarbonsäuren mit mindestens 6 C-Atomen, wie beispielsweise Adipinsäure, Sebacinsäure, Dodecandisäure und/oder Dimerfettsäuren, umgesetzt werden. Diese Flexibilisierungsreaktion kann dabei vor oder nach der Addition von Acryl- bzw. Methacrylsäure an die Oligomere bzw. Präpolymere durchgeführt werden.

Eine Flexibilisierung der Epoxy(meth)acrylate ist beispielsweise analog dadurch möglich, dass entsprechende epoxy-funktionelle Praepolymere bzw. Oligomere mit längerkettigen, aliphatischen Dicarbonsäuren, insbesondere aliphatischen Dicarbonsäuren mit mindestens 6 C-Atomen, wie beispielsweise Adipinsäure, Sebacinsäure, Dodecandisäure und/- oder Dimerfettsäuren umgesetzt werden. Diese Flexibilisierungsreaktion kann dabei vor oder nach der Addition von Acryl- bzw. Methacrylsäure an die Oligomere bzw. Präpolymere durchgeführt werden.

Wie oben ausgeführt, führt die Flexibilisierung der Polyether(meth)-acrylate bzw. der Polyester(meth)acrylate bzw. der Epoxy(meth)acrylate, also ein steigender Gehalt an an aliphatischen Strukturelementen mit mindestens 6 C-Atomen in der Kette dazu, dass die Eigenschaft verschlechtert wird, dass die getrocknete, aber noch nicht endvernetzte transparente Beschichtung (KT) nicht mehr fließt und von einer ggf. aufgebrachten Schutzfolie nicht mehr geprägt wird.

Weiterhin ist die Chemikalienbeständigkeit der endvernetzten transparenten Beschichtung um so besser, je niedriger der Gehalt an aliphatischen Strukturelementen mit mindestens 6 C-Atomen in der Kette ist.

Es ist schließlich für die vorliegende Erfindung wesentlich, dass die radikalisch vernetzbare Komponente (KK) Carbamat- und/oder Biuret- und/oder Allophanat- und/oder Harnstoff- und/oder Amidgruppen enthält. Besonders bevorzugt enthält die Komponente (KK) Biuret- und/oder Allophanatgruppen.

Je höher der Gehalt an Carbamat- und/oder Biuret- und/oder Allophanat- und/oder Harnstoff- und/oder Amidgruppen ist, desto geringer ist die Neigung der getrockneten, aber noch nicht endvernetzten Klarlackschicht (KT) zum Fließen.

Je höher der Gehalt an Carbamat- und/oder Biuret- und/oder Allophanat- und/oder Harnstoff- und/oder Amidgruppen ist, desto besser sind im Allgemeinen auch die Eigenschaften der endvernetzten transparenten Beschichtung (KE).

Ganz besonders bevorzugt wird der Gehalt an Carbamat- und/oder Biuret- und/oder Allophanat- und/oder Harnstoff- und/oder Amidgruppen eingestellt über die Art und Menge der verwendeten Isocyanataddukte bzw. Isocyanatpräpolymere.

Bevorzugt weist die radikalisch vernetzbare Komponente (KK) durchschnittlichen Gehalt an Carbamat- und/oder Biuret- und/oder Allophanat- und/oder Harnstoff- und/oder Amidgruppen von mehr als 0 bis 2,0 mol pro 1000 g reaktive Komponente (KK), vorzugsweise einen Gehalt von 0,1 bis 1,1 und besonders bevorzugt einen Gehalt von 0,2 bis 0,7 mol pro 1000 g reaktive Komponente (KK) auf, wobei die Werte jeweils bezogen sind auf das Gewicht der radikalisch vernetzbaren Komponente (KK), aber selbstverständlich ohne nichtreaktive Komponenten, wie z. B. Lösemittel, Wasser oder Additive.

Das vernetzbare Beschichtungsmittel (K) enthält bevorzugt 30,0 bis 99,9 Gew. -%, besonders bevorzugt 34,0 bis 69,9 Gew. -% und ganz besonders bevorzugt 38,8 bis 59,5 Gew. -%, jeweils bezogen auf das Gesamtgewicht des Beschichtungsmittels (K), der Komponente (KK).

Vorzugsweise enthalten die vernetzbaren Beschichtungsmittel (K) mindestens einen Initiator der chemischen Vernetzung. Vorzugsweise sind diese Initiatoren Photoinitiatoren. Bevorzugt wird der Photoinitiator oder werden die Photoinitiatoren aus der Gruppe, bestehend aus unimolekularen (Typ I) und bimolekularen (Typ II) Photoinitiatoren ausgewählt. Besonders bevorzugt werden die Photoinitiatoren des Typs I aus der Gruppe, bestehend aus Benzophenonen in Kombination mit tertiären Aminen, Alkylbenzophenonen, 4,4'-Bis(dimethylamino)benzophenon (Michlers Keton), Anthron und halogenierten Benzophenonen, und die Photoinitiatoren des Typs II aus der Gruppe, bestehend aus Benzoinen, Benzoinderivaten, insbesondere Benzoinethem, Benzilketalen, Acylphosphinoxiden, insbesondere 2,4,6-Trimethylbenzoyl-diphenylphosphinoxid und Ethyl-2,4,6-trimethylbenzoylphenyl-2,4,6-Trimethylbenzoyl-diphenylphosphinoxid,phosphinat, Bisacylphosphinoxiden,Phenylglyoxyl Phenylglyoxylsäureestern, Campherchinon, alpha-Aminoalkylphenonen, alpha,alpha-Dialkoxyacetophenonen und alpha-Hydroxyalkylphenonen, ausgewählt.

Wenn die Beschichtungsmittel ausschließlich oder zusätzlich thermisch endvernetzt werden, enthalten sie bevorzugt C-C-spaltende Initiatoren, vorzugsweise Benzpinakole. Beispiele geeigneter Benzpinakole sind Benzpinakolsilylether oder die substituierten und unsubstituierten Benzpinakole, wie sie in dem amerikanischen Patent US 4,288,527 A in Spalte 3, Zeilen 5 bis 44, und der WO02/16461, Seite 8, Zeile 1, bis Seite 9, Zeile 15, beschrieben werden. Bevorzugt werden Benzpinakolsilylether, insbesondere Gemische aus monomeren und oligomeren Benzpinakolsilylethern, verwendet.

Der Gehalt der vernetzbaren Beschichtungsmittel (K) an den Initiatoren kann breit variieren und richtet sich nach den Erfordernissen des Einzelfalls und den anwendungstechnischen Eigenschaften, die die hieraus hergestellten Beschichtungen (KE) haben sollen. Vorzugsweise liegt der Gehalt bei 0,1 bis 10, insbesondere 1,0 bis 7,0 Gew. -%, jeweils bezogen auf den Festkörper des Beschichtungsmittels (K).

Darüber hinaus können die vernetzbaren Beschichtungsmittel (K) übliche und bekannte Zusatzstoffe in wirksamen Mengen enthalten. Üblicherweise beträgt die Menge dieser Zusatzstoffe zwischen 0 und 10 Gew. -%, bevorzugt zwischen 0,2 und 5,0 Gew. -%, jeweils bezogen auf den Festkörper des Beschichtungsmittels (K). Vorzugsweise werden sie aus der Gruppe, bestehend aus Lichtschutzmitteln, wie UV-Absorber und reversible Radikalfänger (HALS); Antioxidantien; Netzmitteln; Emulgatoren; Slipadditiven; Polymerisationsinhibitoren; Haftvermittlern; Verlaufmitteln; filmbildenden Hilfsmitteln; Rheologiehilfsmitteln; Korrosionsinhibitoren, die keine Pigmente sind; Flammschutzmitteln, Rieselhilfen; Wachsen; Sikkativen; Bioziden und Mattierungsmitteln, ausgewählt.

Beispiele geeigneter Zusatzstoffe werden im Detail in dem Lehrbuch »Lackadditive« von Johan Bieleman, Wiley-VCH, Weinheim, New York, 1998, in D. Stoye und W. Freitag (Editors), in der deutschen Patentanmeldung DE 199 14 896 A1, Spalte 14, Zeile 26, bis Spalte 15, Zeile 46, oder in der deutschen Patentanmeldung DE 199 08 018 A1, Seite 9, Zeile 31, bis Seite 8, Zeile 30, beschrieben.

Die vernetzbaren Beschichtungsmittel (K) enthalten im Allgemeinen noch konventionelle Lösemittel und/oder Wasser, können aber auch im wesentlichen oder vollständig frei von Lösemittel und im wesentlichen oder vollständig frei von Wasser als sogenannte 100% Systeme formuliert werden. Wenn die Beschichtungsmittel (K) Lösemittel enthalten, dann enthalten sie bevorzugt 20 bis 70 Gew. -%, besonders bevorzugt 30 bis 64,5 Gew. -% und ganz besonders bevorzugt 40 bis 60 Gew. -%, jeweils bezogen auf das Gesamtgewicht des Beschichtungsmittels (K), eines oder mehrerer Lösemittel und/oder Wasser, bevorzugt eines oder mehrerer organischer Lösemittel.

Geeignet sind alle üblicherweise in Klarlacken eingesetzten Lösemittel, insbesondere Alkohole, Glykolether, Ester, Etherester und Ketone, aliphatische und/oder aromatische Kohlenwasserstoffe, wie beispielsweise Aceton, Methylisobutylketon, Methylethylketon, Butylacetat, 3-Butoxy-2-propanol, Ethylethoxypropionat, Butylglykol, Dipropylenglykolmethylether, Glykolsäurebutylester, Shellsol ® T, Pine Oel 90/95, Solventnaphtha ®, Shellsol ® A, Benzin 135/180 u.ä.

Bevorzugt enthält das vernetzbare Beschichtungsmittel (K) weniger als 20 Gew. -%, insbesondere weniger als 10 Gew. -%, besonders bevorzugt weniger als 5 Gew. -% , jeweils bezogen auf das Gewicht der Komponente (KK), und ganz besonders bevorzugt keinen polymeren, gesättigten Bestandteil (KS), insbesondere keine thermoplastischen Polymeren.

Methodisch weist die Herstellung der Beschichtungsmittel (K) keine Besonderheiten auf, sondern erfolgt durch das Vermischen und Homogenisieren der vorstehend beschriebenen Bestandteile mit Hilfe üblicher und bekannter Mischverfahren und Vorrichtungen wie Rührkessel, Rührwerksmühlen, Kneter, Ultraturrax, Inline-Dissolver, statische Mischer, Zahnkranzdispergatoren, Druckentspannungsdüsen und/oder Microfluidizer, bevorzugt unter Ausschluss von aktinischer Strahlung.

Das transparente Beschichtungsmittel wird üblicherweise in solchen Menge aufgetragen, dass eine Trockenfilmschichtdicke von mindestens 20 µm, bevorzugt eine Trockenfilmschichtdicke von 30 bis 160 µm, besonders bevorzugt von 40 bis 100 µm, resultiert.

### Pigmentiertes Beschichtungsmittel (P)

Als pigmentiertes Beschichtungsmittel (P) werden lösemittelhaltige oder wäßrige Beschichtungsmittel (P) eingesetzt, die im Allgemeinen physikalisch oder thermisch und/oder mit aktinischer Strahlung härtbar sind. Es werden aber auch pigmentierte Beschichtungsmittel auf Basis thermoplastischer Polymerer eingesetzt.

Die eingesetzten pigmentierten Beschichtungsmittel (P) enthalten üblicherweise
(I) ggf. ein oder mehrere Lösemittel und/oder Wasser,
(II) ein oder mehrere thermoplastische Polymere oder ein oder mehrere Bindemittel, bevorzugt Polyurethanharze und/oder Acrylatharze, besonders bevorzugt eine Mischung aus mindestens einem Polyurethanharz und mindestens einem Acrylatharz,
(III) ggf. mindestens ein Vernetzungsmittel,
(IV) ein oder mehrere Pigmente sowie
(V) ggf. ein oder mehrere übliche Hilfs- und Zusatzstoffe.

Bevorzugt enthalten die pigmentierten Beschichtungsmittel (P) ein oder mehrere Lösemittel und/oder Wasser.

Geeignete pigmentierte Beschichtungsmittel sind beispielsweise in der US-A-5,985,079, Spalte 7, Zeilen 15 - 38, und Spalte 8, Zeile 51, bis Spalte 9, Zeile 17, der EP-B-551 409, Seite 4, Zeilen 37 bis 46, sowie der EP-B1-1047556, Seite 4, Zeilen 36 - 55, beschrieben.

Geeignete pigmentierte Beschichtungsmittel enthalten beispielsweise ein oder mehrere Polymere, insbesondere ein oder mehrere thermoplastische Polymere, insbesondere ausgewählt aus der Gruppe der Urethanpolymere, Acrylpolymere und Methacrylpolymere, Vinylpolymere, Fluorpolymere und Mischungen dieser Polymere. Geeignete Fluorpolymere sind Polyvinylidenfluorid-Homo- und Polyvinylidenfluorid-Copolymere, die beispielsweise unter dem Namen KYNAR® von der Firma Elf Atochem und SOLEF® von der Firma Solvay im Handel erhältlich sind, insbesondere Copolymere aus Vinylidenfluorid und Hexafluorpropylen. Geeignet sind auch Mischungen von Fluorpolymeren und Acrylpolymeren, wie in der EP-B-551 409, Seite 4, Zeilen 43 bis 46, beschrieben. Wie in der EP-B1-1047556, Seite 4, Zeilen 49 - 55, beschrieben, werden diese pigmentierten Beschichtungsmittel (P) bevorzugt als Lösung oder als Dispersion der Polymere, insbesondere als Lösung oder als Dispersion von Polyvinylidenfluorid-Homo- und Polyvinylidenfluorid-Copolymeren, in einem organischen Lösemittel eingesetzt.

Bevorzugt werden die üblichen und bekannten, physikalisch und/oder thermisch härtbaren, konventionellen oder wässrigen Basislacke (P) verwendet werden, wie sie beispielsweise aus der WO 03/016095 A1, Seite 10, Zeile 15, bis Seite 14, Zeile 22, oder insbesondere aus der USA-5, 030, 514, Spalte 2, Zeile 63, bis Spalte 6, Zeile 68 und Spalte 8, Zeile 53 bis Spalte 9, Zeile 10 sowie EP-B-754 740, Spalte 3, Zeile 37, bis Spalte 6, Zeile 18, bekannt sind.

Ganz besonders bevorzugt werden - ggf. - thermisch härtbare Wasserbasislacke (P) eingesetzt.

Als Bindemittel geeignet sind dabei die in Basislacken im Bereich der Automobilindustrie üblicherweise eingesetzten Polyurethanharze und Acrylatharze, wobei in dem Fachmann bekannter Weise über die Auswahl der Art und Menge der zur Herstellung dieser Bindemittel eingesetzten Aufbaukomponenten insbesondere die Flexibilität und damit die Eignung der Bindemittel für das erfindungsgemäße Verfahren gesteuert wird. Bezüglich Einzelheiten sei wiederum beispielsweise auf die US-A-5,030,514, Spalte 2, Zeile 63, bis Spalte 6, Zeile 68 und Spalte 8, Zeile 53 bis Spalte 9, Zeile 10 verwiesen.

Darüber hinaus enthalten die pigmentierten Beschichtungsmittel bevorzugt als Vernetzungsmittel noch mindestens ein Aminoplastharz. Geeignet sind prinzipiell die im Bereich der Lackindustrie üblicherweise eingesetzten Aminoplastharze, wobei über die Reaktivität der Aminoplastharze die Eigenschaften der pigmentierten Beschichtungsmittel gesteuert werden können.

Der Gehalt an Bindemittel und ggf. Aminoplastharz in dem pigmentierten Beschichtungsmittel kann dabei breit variiert werden und liegt üblicherweise bei 0 bis 70 Gew. -%, bevorzugt 10 bis 60 Gew. -%, Polyurethanharz, 0 bis 70 Gew. -%, bevorzugt 10 bis 60 Gew. -%, Acrylatharz und 0 bis 45 Gew. -%, bevorzugt 5 bis 40 Gew. -%, Aminoplastharz, jeweils bezogen auf die Gesamtmenge an Bindemittel plus Aminoplastharz.

Bezogen auf das Gesamtgewicht des pigmentierten Beschichtungsmittels (P) beträgt der Anteil an Bindemittel plus ggf. Aminoplastharz üblicherweise 10 bis 50 Gew. -%.

Das pigmentierte Beschichtungsmittel (P) enthält außerdem mindestens ein Pigment. Vorzugsweise wird das Pigment aus der Gruppe, bestehend aus organischen und anorganischen, farbgebenden, effektgebenden, farb- und effektgebenden, magnetisch abschirmenden, elektrisch leitfähigen, korrosionshemmenden, fluoreszierenden und phosphoreszierenden Pigmenten, ausgewählt. Vorzugsweise werden die farb- und/oder effektgebenden Pigmente verwendet.

Beispiele geeigneter Effektpigmente, die auch farbgebend sein können, sind Metallplättchenpigmente, wie handelsübliche Aluminiumbronzen, gemäß DE 36 36 183 A1 chromatierte Aluminiumbronzen, und handelsübliche Edelstahlbronzen, sowie nichtmetallische Effektpigmente, wie zum Beispiel Perlglanz- bzw. Interferenzpigmente, plättchenförmige Effektpigmente auf der Basis von Eisenoxid oder flüssigkristalline Effektpigmente. Ergänzend wird auf Römpp Lexikon Lacke und Druckfarben, Georg Thieme Verlag, 1998, Seiten 176, »Effektpigmente« und Seiten 380 und 381 »Metalloxid-Glimmer-Pigmente« bis »Metallpigmente« verwiesen.

Geeignete organische und/oder anorganische farbgebende Pigmente sind die in der Lackindustrie üblicherweise eingesetzten Pigmente.

Der Gehalt des Beschichtungsmittels (P) an den Pigmenten kann sehr breit variieren und richtet sich in erster Linie nach der Tiefe der Farbe und/oder der Intensität des Effekts, die eingestellt werden sollen, sowie nach der Dispergierbarkeit der Pigmente in den Beschichtungsmitteln (P). Vorzugsweise liegt der Pigmentgehalt, jeweils bezogen auf das Beschichtungsmittel (P), bei 0,5 bis 50, bevorzugt 1 bis 30, besonders bevorzugt 2 bis 20 und insbesondere 2,5 bis 10 Gew. -%.

Außer den vorstehend beschriebenen Pigmenten kann das Beschichtungsmittel (P) übliche und bekannte Hilfs- und Zusatzstoffe, wie organische und anorganische, transparente und deckende Füllstoffe und Nanopartikel sowie weitere übliche Hilfs- und Zusatzstoffe in üblichen Mengen, bevorzugt 0 bis 40 Gew. -%, bezogen auf das Beschichtungsmittel (P), enthalten.

Das pigmentierte Beschichtungsmittel (P) wird üblicherweise in solchen Menge aufgetragen, dass eine Trockenfilmschichtdicke von mindestens 20 µm, bevorzugt eine Trockenfilmschichtdicke von 25 bis 160 µm, besonders bevorzugt von 25 bis 80 µm, resultiert.

### Trägerfolie (T)

Für die Applikation des Beschichtungsmittels (K) geeignete Trägerfolien (T) sind alle üblicherweise eingesetzten Trägerfolien, sofern sie die erforderliche Oberflächenqualität der endvernetzten transparenten Beschichtung (KE) gewährleisten. Insbesondere werden Trägerfolien mit einer glatten Oberfläche, d.h. einer möglichst geringen Rauigkeit, eingesetzt, um die Übertragung einer Oberflächenstruktur von der Trägerfolie auf die Beschichtung (KE) zu vermeiden, wie dies beispielsweise in der EP-B-1 047 556, Seite 3, Zeilen 2 bis 4 und 44 bis 48, und der US-A-5,985,079, Spalte 2, Zeilen 47 - 64, sowie Spalte 7, Zeile 59, bis Spalte 8, Zeile 15, beschrieben ist.

Die Trägerfolie (T) hat gemäß US-A-4,931,324,Spalte 6, Zeilen 14 - 44, bevorzugt eine maximale Rauigkeit von Rₐ < 10 nm, besonders bevorzugt < 6 nm.

Geeignet sind beispielsweise bekannte Trägerfolien auf Basis von Polyestern, besonders bevorzugt auf Basis von Polyethylenterephthalat (PET), die bevorzugt keine Additive enthalten, die bei der Beschichtung (KE) den Glanz und DOI erniedrigen oder den Oberflächen-Haze erhöhen. Ganz besonders bevorzugt werden daher Trägerfolien eingesetzt, die keine sogenannten Slip-Additive enthalten.

Geeignet sind beispielsweise die in der EP-B-551 409 auf Seite 4, Zeilen 17 bis 28, beschriebenen Folien auf Basis von Polypropylen und Polyestern, wie z.B. Polyethylenterephthalat (PET), Ethylenglykol modifiziertem Polyethylenterephthalat (PETG) oder Polybutylenterephthalat, die beispielsweise auch im Handel unter den Bezeichnungen Extrel der Firma Exxon und Bicor der Firma Mobil im Falle von Polypropylenfolien bzw. Pacur der Firma Pacur im Falle von PETG Folien vertrieben werden, sowie auch die in der US-A-5,985,079, Spalte 7, Zeile 59, bis Spalte 8, Zeile 15, beschriebenen Trägerfolien sowie die im Handel unter der Bezeichnung Melinex 455 der Firma DuPont Teijin Films erhältliche Trägerfolie.

Die erfindungsgemäß eingesetzten Trägerfolien (T) weisen im Allgemeinen eine durchschnittliche Schichtdicke von 50 µm auf.

### Haftvermittlerschicht (H)

Es ist bevorzugt, dass die pigmentierte Beschichtung (PB) an ihrer der transparenten Beschichtung abgewandten Seite eine Haftvermittlerschicht (H) aufweist. Eingesetzt werden übliche und bekannte Haftvermittlerschichten, wobei üblicherweise die Haftvermittlerschicht abgestimmt ist einerseits auf die pigmentierte Beschichtung sowie andererseits auf die Substratschicht, auf die die erfindungsgemäße Folie (F) aufgebracht werden soll.

Die Haftvermittlerschicht weist üblicherweise eine Schichtdicke von 5 bis 50 µm auf.

Zur Herstellung von Formteilen mittels der erfindungsgemäßen Folien (F) ist es - wie weiter unten beschrieben - möglich, die Folie (F) mit Hilfe einer Haftvermittlerschicht (H) direkt auf ein Substrat zu laminieren. In diesem Fall wird - wie beispielsweise in der EP-B1-1 047 556, Seite 4, Zeile 56, bis Seite 5, Zeile 7, und der US-A-5,985,079, Spalte 11, Zeilen 31 - 37 beschrieben - die Haftvermittlerschicht vorteilhafterweise derart ausgewählt, dass die Anfangshaftung auf dem Substrat (Formteil) möglichst niedrig ist, um ggf. noch Korrekturen in der Position der Folie auf dem Substrat zu ermöglichen. Die Endverbindung zwischen Folie und Substrat sollte dagegen möglichst dauerhaft sein, um ein Ablösen der Folie vom Formteil während der späteren Nutzung zu verhindern.

Wie beispielsweise in der US-A-5,985,079, Spalte 10, Zeile 31, bis Spalte 11, Zeile 30, beschrieben, ist es erfindungsgemäß aber auch möglich, die Folie (F) mittels einer Haftvermittlerschicht (H) mit einer weiteren thermoformbaren Trägerfolie (C) zu verbinden und dann die Folie mit dem Kunststoffmaterial (KM) zu hinterspritzen. Hier ist selbstverständlich eine gute Haftung sowohl zwischen (PB) und (H) als auch zwischen (C) und (H) zu gewährleisten.

Geeignet sind beispielsweise Haftvermittler auf Basis von Acrylatcopolymeren, chlorierten Polyolefinen, Urethanen o.ä.. Bevorzugt werden mittels Druck bzw. Wärme aktivierbare Haftvermittlerschichten (H) eingesetzt. Geeignete Haftvermittler sind beispielsweise auch in der US-A-5,985,079, Spalte 10, Zeile 30, bis Spalte 11, Zeile 30, beschrieben.

### Thermoformbare Trägerfolie (C)

Die Trägerfolie (C) besteht im Wesentlichen oder völlig aus mindestens einem thermoplastischen Polymer. Vorzugsweise wird das thermoplastische Polymer aus der Gruppe, bestehend aus üblichen und bekannten, linear, verzweigt, sternförmig kammförmig und/oder, blockartig aufgebauten Homo- und Copolymerisaten, ausgewählt. Bevorzugt werden die Homo- und Copolymerisate aus der Gruppe, bestehend aus Polyurethanen, Polyestern, insbesondere Polyethylenterephthalaten und Polybutylenterphthalaten, Polyethern, Polyolefinen, insbesondere Polypropylen, Polyamiden, thermoplastichen Polyolefinen (TPO), wie (PP/EPDM), Polycarbonaten, Polyvinylchloriden, Polyvinylidenfluoriden, Poly(meth)-acrylaten, insbesondere Polymethylmethacrylaten und Polybutylmethacrylaten und schlagzäh modifizierten Polymethylmethacrylaten, Polystyrolen, insbesondere schlagzäh modifizierten Polystyrolen, speziell Acrylnitrilbutadienstyrolcopolymeren (ABS), Acrylstyrolacrylnitrilcopolymeren (ASA) und Acrylnitrilethylenpropylendienstyrolcopolymeren (A-EPDM); Polyetherimiden, Polyetherketonen, Polyphenylensulfiden, Polyphenylenethern und Mischungen dieser Polymeren, ausgewählt.

Unter ASA werden dabei im Allgemeinen schlagzähmodifizierte Styrol/- Acrylnitril-Polymerisate verstanden, bei denen Pfropfcopolymerisate von vinylaromatischen Verbindungen, insbesondere Styrol, und von Vinylcyaniden, insbesondere Acrylnitril, auf Polyalkylacrylatkautschuken in einer Copolymermatrix aus insbesondere Styrol und Acrylnitril, vorliegen.

Mit besonderem Vorteil werden Polypropylen, ASA, Polycarbonate, Blends aus ASA und Polycarbonaten, Polymethylmethacrylate oder schlagzäh modifizierte Polymethylmethacrylate, insbesondere Blends aus ASA und Polycarbonaten, bevorzugt mit einem Polycarbonatanteil > 40%, insbesondere > 50%, verwendet.

Für die Trägerfolie (C) bevorzugt eingesetzte Materialien sind auch insbesondere die in der DE-A-101 13 273 auf Seite 2, Zeile 61, bis Seite 3, Zeile 26, beschriebenen thermoplastischen Polymeren.

Die Homo- und Copolymerisate können die auf dem Gebiet der thermoplastischen Kunststoffe üblichen und bekannten Additive enthalten. Außerdem könne sie übliche und bekannte Füllstoffe, Verstärkerfüllstoffe und Fasern enthalten. Nicht zuletzt können sie auch die Pigmente einschließlich Effektpigmente und/oder übliche und bekannte Farbstoffe enthalten und so eine Farbtonanpassung der Trägerfolien an den Farbton der aus den pigmentierten Beschichtungsmitteln (P) erhaltenen Beschichtung ermöglichen.

Die Schichtdicke der Trägerfolie (C) liegt üblicherweise bei mehr als 0,5 mm, bevorzugt zwischen 0,7 und 2,0 mm und besonders bevorzugt zwischen 0,9 und 1,2 mm.

### Schutzfolie (S)

Insbesondere wenn die erfindungsgemäßen, mit einer Beschichtung (B) versehenen Folien (F) mittels des Thermoformverfahrens weiterverarbeitet werden, wird die Trägerfolie (T) - bevorzugt nach Applikation der Haftvermittlerschicht (vgl. auch EP-B-1 047 556, Seite 3, Abschnitt 0015) - entfernt und durch eine Schutzfolie (S) ersetzt.

Als Schutzfolie (S) geeignet sind alle üblicherweise eingesetzten Schutzfolien, die ein- oder mehrschichtig sein können. Bevorzugt werden thermoformbare Schutzfolien eingesetzt. Die Schutzfolien werden dabei insbesondere derart ausgewählt, dass bei der Weiterverarbeitung der Folien, insbesondere beim Thermoformen, Verschlechterungen der Eigenschaften der transparenten Beschichtung, wie insbesondere Vermattung, Verschlechterung des DOI (Distinctness of Image) u.ä., vermieden werden.

Insbesondere werden die in der WO00/51798, Seite 7, Zeile 8, bis Seite 9, Zeile 4, die in der WO 02/00448, Seite 7, Zeile 17, bis Seite 10, Zeile 2, sowie die in der DE-A-10335620, Seite 7, Abschnitt 0059, bis Seite 8, Abschnitt 0072, beschriebenen Schutzfolien eingesetzt.

Geeignet sind insbesondere Schutzfolien (S) auf Basis von Polyurethanpolymeren, Polyesterurethanen, Polyetherurethanen oder Homo- und Copolymerisaten aus Polyethylen, Polypropylen, Ethylencopolymerisaten, Propylencopolymerisaten und Ethylen-Propylen-Copolymerisaten.

Bevorzugt wird die Schutzfolie derart ausgewählt, dass sie bei einer Schichtdicke von 50 µm eine Transmission > 70% für UV-Strahlung und sichtbares Licht einer Wellenlänge von 230 bis 600 nm hat.

Ferner werden bevorzugt Schutzfolien eingesetzt, die im Temperaturbereich von Raumtemperatur bis 100 °C einen Speichermodul E' von mindestens 10⁷ Pa sowie längs und quer zu der bei der Herstellung der Schutzfolie mit Hilfe gerichteter Herstellverfahren erzeugten Vorzugsrichtung bei 23 °C eine Bruchdehnung > 300% aufweisen. Besonders bevorzugt weist die der Beschichtung (B) zugewandte Seite der Schutzfolie außerdem eine Härte < 0,06 GPa bei 23 °C und eine mit Hilfe der atomic force miscroscopy (AFM) bestimmte Rauhigkeit, entsprechend einem Rₐ-Wert aus 50 µm² < 30 nm, auf.

Ganz besonders bevorzugt sind die Schutzfolien (S) 10 bis 100 µm, insbesondere 30 bis 70 µm, dick.

Die erfindungsgemäß zu verwendenden Schutzfolien (S) sind üblich und bekannt und werden beispielsweise von der Firma Bischof + Klein, D-49525 Lengerich, unter der Bezeichnung GH-X 527, GH-X 529 und GH-X-535 angeboten.

### Kunststoffmaterial (KM)

Vorzugsweise enthält das flüssige oder erweichte Kunststoffmaterial (KM) mindestens ein geschmolzenes bzw. erweichtes, thermoplastisches Polymer, insbesondere mindestens eines der vorstehend bei der thermoformbaren Trägerfolie (C) beschriebenen thermoplastischen Polymeren, oder es besteht aus diesem.

Bevorzugt werden Kunststoffmaterialien eingesetzt, die Fasern enthalten, wobei unter Fasern auch plättchenförmige Produkte zu verstehen sind. Beispiele für geeignete Fasern sind Kohlenstoff- Aramid- Stahl- oder Glasfasern, Aluminium-Flakes, bevorzugt Glasfasern.

Beispielsweise sind auch die in der DE-A-101 13 273 auf Seite 4, Zeile 44, bis Seite 5, Zeile 45 beschriebenen Kunststoffmaterialien geeignet.

Die Verfahrensvariante, bei der ein solches geschmolzenes bzw. erweichtes, thermoplastisches Polymer verwendet wird, wird auch als Hinterspritzen (»injection moulding«) bzw. Hinterpressen bezeichnet.

Bei dem flüssigen oder erweichten Kunststoffmaterial kann sich aber auch um ein übliches und bekanntes reaktionsfähiges Gemisch handeln, das im Formwerkzeug bzw. Hinterfütterwerkzeug das feste Kunststoffmaterial (KM) bildet. Das Kunststoffmaterial (KM) kann ebenfalls die vorstehend im Zusammenhang mit der Trägerfolie (C) beschriebenen Zusatzstoffe enthalten. Ferner können auch Kunststoffmaterialien (KM) eingesetzt werden, die porenbildende Treibmittel enthalten. Beispiele für geeignete reaktionsfähige Gemische sind die im Hinterschäumverfahren üblicherweise eingesetzten bekannten reaktionsfähigen Gemische, insbesondere Polyurethan-Schäume, z.B. die in der EP-B-995 667, insbesondere EP-B-995 667, Spalte 2, Zeile 40, bis Spalte 3, Zeile 14; Spalte 5, Zeilen 23 bis 29; Spalte 8, Zeilen 33 bis 38, beschriebenen reaktionsfähigen Gemische.

Die Verfahrensvariante, bei der ein solches reaktionsfähiges Gemisch bzw. treibmittelhaltiges Gemisch (KM) verwendet wird, wird auch als Hinterschäumen (»reaction-injection moulding«, RIM) bezeichnet.

### Verfahren zur Herstellung der eine Beschichtung (B) aufweisenden Folien (F)

### Verfahrensschritt 1

Das Beschichtungsmittel (K) kann in einer oder mehreren Schichten, bevorzugt in einer Schicht, mit Hilfe von gerichteten und von nicht gerichteten Applikationsverfahren aufgetragen werden. Bevorzugt wird das Beschichtungsmittel (K) mit gerichteten Applikationsverfahren aufgetragen. Insbesondere werden Rakel, Gießvorrichtungen und Walzen verwendet. Ganz bevorzugt wird das Beschichtungsmittel (K) mit Extrusionsgießern aufgetragen. Bevorzugt werden die Beschichtungsmittel (K) unter Ausschluss von aktinischer Strahlung aufgetragen und weiter verarbeitet.

Beispiele geeigneter nicht gerichteter Applikationsverfahren und Vorrichtungen hierfür sind aus der WO 03/016095 A1, Seite 20, Zeile 4, bis Seite 23, Zeile 25, bekannt, beispielsweise pneumatische oder elektrostatische Spritzvorrichtungen.

### Verfahrensschritt 2

Es ist wesentlich, dass das aufgebrachte Beschichtungsmittel (K) nach seiner Applikation getrocknet und/oder partiell vernetzt wird, wodurch eine noch nicht endvernetzte Beschichtung (KT) erzeugt wird.

Die so erhaltene Beschichtung (KT) darf nicht mehr fließen und bei der Weiterverarbeitung, insbesondere bei der Applikation der pigmentierten Beschichtungsmittel, nicht an den Vorrichtungen kleben oder durch sie geprägt werden. Dadurch ist gewährleistet, dass Formteile erhalten werden, die in ihrem folienseitigen Erscheinungsbild den Anforderungen an eine so genannte Class-A-Oberfläche genügen.

Für die Trocknung bzw. Konditionierung der nassen transparenten Beschichtung sowie der nassen pigmentierten Beschichtung werden bevorzugt thermische und/oder Konvektionsverfahren verwendet, wobei übliche und bekannten Vorrichtungen, wie Durchlauföfen, NIR- und IR-Heizstrahler, Gebläse und Blastunnel, eingesetzt werden. Diese Vorrichtungen können auch miteinander kombiniert werden.

Üblicherweise und wie beispielsweise in der WO99/37479, Seite 5, Zeile 29, bis Seite 6, Zeile 2, beschrieben, erfolgt die Trocknung bzw. Konditionierung der transparenten Beschichtung derart, dass die Beschichtung bei Umgebungstemperatur (im Allgemeinen 25°C) oder leicht erhöhter Temperatur abgelüftet wird und anschließend bei erhöhter Temperatur (bevorzugte Ofentemperatur von 100 bis 250 °C, besonders bevorzugt 150 bis 200 °C) getrocknet wird.

### Verfahrensschritt 3

Das pigmentierte Beschichtungsmittel (P) kann in einer oder in zwei oder mehreren Schichten mit Hilfe von gerichteten und von nicht gerichteten Applikationsverfahren auf die Beschichtung (KT) aufgebracht werden. Bevorzugt erfolgt die Applikation mittels gerichteter Applikationsverfahren.

Insbesondere bei Applikation von pigmentierten Beschichtungsmitteln, die Metallic- und/oder Effektpigmente enthalten, kann es aber erforderlich werden, dass das pigmentierte Beschichtungsmittel mittels spezieller Verfahren appliziert wird. Wird in diesem Fall das pigmentierte Beschichtungsmittel (P) in nur einer Schicht aufgetragen, so erfolgt dies vorzugsweise mit Hilfe eines nicht gerichteten Applikationsverfahrens, das in den resultierenden pigmentierten Beschichtungen keine Anordnung der Pigmente in einer Vorzugsrichtung hervorruft. D. h., die Pigmente sind in der Beschichtung isotrop verteilt. Beispiele geeigneter nicht gerichteter Applikationsverfahren und Vorrichtungen hierfür sind aus der WO 03/016095 A1, Seite 20, Zeile 4, bis Seite 23, Zeile 25, bekannt. Insbesondere werden pneumatische oder elektrostatische Spritzvorrichtungen verwendet, wie sie in der WO 03/016095 A1, Seite 20, Zeile 4, bis Seite 23, Zeile 25 beschrieben sind.

Wird in diesem speziellen Fall das pigmentierte Beschichtungsmittel (P) in zwei oder mehreren Schichten aufgetragen, so erfolgt dies vorzugsweise dadurch, dass die zweite - oder bei insgesamt mehr als 2 pigmentierten Schichten - die zweite und die nachfolgenden Schichten mit Hilfe eines gerichteten Applikationsverfahrens, das in der resultierenden pigmentierten Beschichtung eine Anordnung der Pigmente in einer Vorzugsrichtung, d. h., eine anisotrope Verteilung der Pigmente hervorruft, aufgetragen wird bzw. werden. Beispiele geeigneter gerichteter Applikationsverfahren sind aus der WO 03/016095 A1, Seite 15, Zeilen 6 bis 19, bekannt. Insbesondere werden Rakel, Gießvorrichtungen und Walzen verwendet. Die erste pigmentierte Schicht wird dann mittels des oben beschriebenen nicht gerichteten Applikationsverfahrens aufgebracht.

### Verfahrensschritt 4

Aus dem in Stufe 3 aufgebrachten Beschichtungsmittel (P) wird im Verfahrensschritt 4 eine Beschichtung (PB) erzeugt. Üblicherweise und wie beispielsweise in der WO99/37479, Seite 7, Zeilen 16 bis 22, beschrieben, erfolgt dies durch Trocknung bzw. Konditionierung bzw. partielle und/oder vollständige Vernetzung der pigmentierten Beschichtung analog zur Trocknung der transparenten Beschichtung derart, dass die Beschichtung bei Umgebungstemperatur (im Allgemeinen 25°C) oder leicht erhöhter Temperatur von bis zu 80°C abgelüftet und anschließend bei erhöhter Temperatur (bevorzugte Ofentemperatur von 100 bis 250 °C, besonders bevorzugt 150 bis 200 °C) getrocknet wird. Falls jedoch lösemittelfreie pigmentierte Beschichtungsmittel (P) eingesetzt werden, kann sich diese Trocknung und ggf. anschließende Vernetzung jedoch erübrigen und man erhält direkt - ggf. nach Abkühlung des Beschichtungsmittels (P), falls bei erhöhter Temperatur appliziert wurde, die Beschichtung (PB).

### Verfahrensschritt 5

Die Haftvermittlerschicht kann auf unterschiedliche Weise auf die pigmentierte Beschichtung (PB) aufgebracht werden. So ist es beispielsweise möglich, die Haftvermittlerschicht aus einer Lösung direkt auf die pigmentierte Beschichtung (PB) zu applizieren und anschließend mittels üblicher Verfahren zu trocknen.

Ferner ist es beispielsweise möglich, die Haftvermittlerschicht in einem separaten Verfahrensschritt -wie in der EP-B-1 047 556, Seite 5, Zeilen 1 bis 7 und Fig. 2 beschrieben - aus der Lösung oder aus der Schmelze auf eine glatte Releasefolie (R) mittels Gießen bzw. mittels Extrusion zu applizieren. Falls die Applikation aus der Lösung erfolgte, wird die Haftvermittlerschicht danach zunächst mittels üblicher Trocknungsverfahren getrocknet, ehe sie auf die mit der Beschichtung versehene Folie aufgebracht wird. Die so erhaltene, mit der Releasefolie versehene Folie kann dann beispielsweise zu Rollen aufgewickelt und an den Hersteller der Formteile geliefert werden. Die Releasefolie wird dann kurz vor Applikation der Folie (F) auf das Substrat entfernt. Die Releasefolie kann aber auch direkt nach Applikation der Haftvermittlerschicht auf der Beschichtung (PB) entfernt werden, insbesondere, wenn auf die Haftvermittlerschicht direkt die thermoformbare Trägerfolie (C) appliziert wird.

Als Releasefolie (R) geeignet sind beispielsweise die bekannten ggf. silikonbeschichtete Polyethylenterephthalatfolien oder Polyolefinfolien. Bevorzugt werden Releasefolien mit einer glatten Oberfläche eingesetzt, da sich eine ggf. vorhandene Oberflächenstruktur bis auf die transparente Beschichtung (KE) übertragen und so das gesamte Erscheinungsbild der Folie (F) negativ beeinflussen kann.

### Verfahrensvariante

Insbesondere wenn die erfindungsgemäßen, mit einer Beschichtung (B) versehenen Folien (F) mittels des Thermoformverfahrens weiterverarbeitet werden, wird die Trägerfolie (T) - bevorzugt nach Applikation der Haftvermittlerschicht (vgl. auch EP-B-1 047 556, Seite 3, Abschnitt 0015), also im Anschluß an den Verfahrensschritt 5 - entfernt und ggf. durch eine Schutzfolie (S) ersetzt.

### Verwendung der Folien (F) zur Herstellung von Formteilen

Es ist auf unterschiedliche Weise möglich, Formteile unter Verwendung der Folien (F) herzustellen.

So können die Folien mit der Haftvermittlerschicht direkt auf ein Substrat auflaminiert werden. Dies ist insbesondere bei Formteilen interessant, bei denen zu ihrer Herstellung nur geringe Verformungen erforderlich sind. In diesem Fall kann das transparente Beschichtungsmittel zu jedem Zeitpunkt des Verfahrens, also auch beispielsweise vor Applikation der pigmentierten Beschichtung, endvernetzt werden. Bevorzugt erfolgt allerdings auch in diesem Fall die Endvernetzung der transparenten Beschichtung erst nach Applikation der Folie (F) mittels (H) auf dem Substrat. Die Trägerfolie (T) wird in diesem Fall bevorzugt nach Applikation der Folie (F) auf dem Substrat, aber vor Endhärtung der transparenten Beschichtung, entfernt.

In diesem Fall weist das Formteil den folgenden Aufbau auf:
Ggf. Trägerfolie (T)
Transparente Beschichtung (KE)
Pigmentierte Beschichtung
Haftvermittlerschicht (H)
Substrat

Bevorzugt werden die Folien aber zur Herstellung von Formteilen mittels Hinterspritzen bzw. Hinterschäumen eingesetzt. In diesem Fall wird die mit der Beschichtung versehene Folie mittels der Haftvermittlerschicht auf eine thermoplastische Trägerfolie (C) auflaminiert, wie dies beispielsweise in der EP-A-1 047 556, Seite 4, Zeile 56, bis Seite 5, Zeile 7, beschrieben ist. Hiernach oder aber auch vor dem Auflaminieren auf die Trägerfolie (C) wird die Trägerfolie (T) entfernt und die Schutzfolie (S) auf die transparente Beschichtung (KT) aufgebracht.

Es wird daher eine Folie mit dem folgenden Aufbau erhalten:
Schutzfolie (S)
Transparente Beschichtung (KT)
Pigmentierte Beschichtung (PB)
Haftvermittlerschicht (H)
Trägerfolie (C)

Diese Folie wird dann in dem Fachmann bekannter Weise mittels der Hinterspritz-/Hinterschäum-Technik zu den Formteilen weiterverarbeitet. Beispielhaft sei hier nur auf die DE-A-101 13 273, Seite 5, Zeile 47, bis Seite 7, Zeile 35, verwiesen.

Diese Folie (S/KT/PB/H/C) wird in ein geöffnetes Formwerkzeug, insbesondere ein Tiefziehwerkzeug oder ein Thermoformwerkzeug, eingelegt. Zu diesem Zweck kann die Folie von einer Rolle gewickelt und in geeignet dimensionierte Stücke zugeschnitten werden. Danach können die Folie (F) bzw. die zugeschnittenen Stücke - insbesondere in dem Tiefziehwerkzeug oder Thermoformwerkzeug - vorgeformt, insbesondere an die Konturen der Hinterfütterwerkzeuge angepasst werden. Diese dreidimensional vorgeformten Stücke werden dann in ein Werkzeug, insbesondere in ein Hinterfütterwerkzeug, eingelegt.

Es ist aber auch möglich, die Folie (F) bzw. zugeschnittene Stücke der Folie (F) direkt, d.h. ohne vorherige dreidimensionale Verformung, in ein Werkzeug, insbesondere ein Hinterfütterwerkzeug bzw. Formwerkzeug, einzulegen und direkt in diesem Werkzeug zu verformen.

Dann wird das Werkzeug geschlossenen, und die der Oberfläche (H) abgewandte Seite der thermoformbaren Trägerfolie (C) wird mit einem flüssigen oder erweichten Kunststoffmaterial (KM) in Berührung gebracht, wodurch die beschichtete thermoplastische Trägerfolie (C) ggf. geformt und mit dem Kunststoffmaterial (KM) haftfest verbunden wird. Anschließend läßt man das Kunststoffmaterial (KM) sich verfestigen.

Das so erhaltene Formteil wird dem Werkzeug entnommen. Es kann danach unmittelbar weiterverarbeitet oder bis zur Endvernetzung der transparenten Beschichtung gelagert werden.

### Endvernetzung der transparenten Beschichtungsmittel (K)

Die Endvernetzung der Beschichtung (KT) erfolgt - wie bei der Beschreibung der Formteile bereits ausgeführt - zu einem beliebigen Zeitpunkt im Verlaufe des Verfahrens. Die Vernetzung kann dabei auch in zwei oder mehreren Schritten erfolgen, so dass - ggf. im Anschluß an eine oder mehrere Teilhärtungen - die Endvernetzung erfolgt. Gegebenenfalls kann in diesem Verfahrensschritt auch die pigmentierte Beschichtung vernetzt oder nachvernetzt werden.

Die noch nicht endvernetzte transparente Beschichtung (KT) weist aber eine im Vergleich zu der endvernetzten Beschichtung (KE) verbesserte Thermoformbarkeit auf. Vorzugsweise wird daher die Beschichtung (KT) nach der Verformung, insbesondere nach der Anpassung der Folie (F) an die Kontur des Werkzeugs, in das die Folie (F) eingelegt wird, endvernetzt. Da aber die noch nicht endvernetzte transparente Beschichtung (KT) eine im Vergleich zu der endvernetzten Beschichtung (KE) verringerte mechanische Belastbarkeit aufweist und beim Hinterspritzen schon aufgrund der üblicherweise angewandten hohen Drucke eine möglichst hohe Belastbarkeit erwünscht ist, um Beschädigungen der Folie zu vermeiden und damit die geforderte Class-A-Oberfläche zu gewährleisten, ist es außerdem bevorzugt, die Endvernetzung vor dem Hinterspritzen, aber nach dem Thermoformen und/oder nach dem Tiefziehen, durchzuführen.

Ferner ist es möglich, die Endvernetzung bei einer erhöhten Temperatur, bevorzugt bei einer Temperatur zwischen 25 und 150 °C, insbesondere zwischen 40 und 120 °C und ganz besonders bevorzugt zwischen 50 und 100 °C, durchzuführen. Die erhöhte Temperatur kann dabei durch gezielte Erwärmung, beispielsweise mittels IR Strahlern, erwärmter Luft oder anderen üblichen Vorrichtungen erzielt werden. Es ist aber auch möglich, die durch das Hinterspritzen hervorgerufene Temperaturerhöhung auszunutzen.

Vorzugsweise erfolgt die Endvernetzung des Beschichtungsmittels (K) mittels energiereicher Strahlen, insbesondere mittels UV-Strahlung. Besonders bevorzugt wird die Endvernetzung wie in der WO 03/016095 A1, Seite 27, Zeilen 19, bis Seite 28, Zeile 24, beschrieben, durchgeführt. Es ist aber auch möglich, die Endvernetzung ausschließlich oder zusätzlich zur Strahlenhärtung thermisch durchzuführen.

Bevorzugt wird bei der Endvernetzung mittels Strahlen eine Strahlendosis von 100 bis 6.000, vorzugsweise 200 bis 3.000, bevorzugt 300 bis 2.500 und besonders bevorzugt 500 bis 2.000 mJcm⁻² eingesetzt, wobei der Bereich < 2.000 mJcm⁻² ganz besonders bevorzugt ist.

Bevorzugt wird die Bestrahlung unter einer sauerstoffabgereicherten Bedingungen durchgeführt. So kann die Bestrahlung vor Entfernen der Trägerfolie (T) bzw. vor Entfernen der Schutzfolie (F) erfolgen, sofern diese Folien eine entsprechende UV-Durchlässigkeit aufweisen. Die Bestrahlung kann auch unter einer sauerstoffabgereicherten Atmosphäre durchgeführt werden. "Sauerstoffabgereichert" bedeutet, dass der Gehalt der Atmosphäre an Sauerstoff geringer ist als der Sauerstoffgehalt von Luft (20,95 Vol. -%). Die Atmosphäre kann im Grunde auch sauerstofffrei sein, d. h., es handelt sich um ein Inertgas. Wegen der fehlenden inhibierenden Wirkung von Sauerstoff kann dies aber eine starke Beschleunigung der Strahlenhärtung bewirken, wodurch Inhomogenitäten und Spannungen in den erfindungsgemäßen vernetzten Massen entstehen können. Es ist daher von Vorteil, den Sauerstoffgehalt der Atmosphäre nicht auf Null Vol. -% abzusenken.

### Verwendung der Formteile

Die nach dem erfindungsgemäßen Verfahren erhaltenen Formteile sind außerordentlich breit anwendbar. So können sie hervorragend als Karosserie-innen- oder -Außenbauteile, als Bauteile für den Schiff- und Flugzeugbau, als Bauteile für Schienenfahrzeuge oder als Bauteile für Haushalts- und Elektrogeräte, für Bauwerke, Fenster, Türen, Möbel und Gebrauchsgegenständen jeglicher Art eingesetzt werden. Bevorzugt werden sie als Karosserie-innen- oder -Außenbauteile bzw. Module, insbesondere von Pkw, Lastkraftwagen und Omnibussen, eingesetzt.

Da die Formteile in ihrem folienseitigem Erscheinungsbild den Anforderungen an eine sogenannte Class-A-Oberfläche genügen und die üblicherweise an eine Automobillackierung gestellten Anforderungen erfüllen, eignen sie sich insbesondere hervorragend als Anbauteile für Pkw-Karosserien, insbesondere für Karosserien von Pkw der Oberklasse, wie z. B. für die Herstellung von Dächern, Heckklappen, Motorhauben, Kotflügeln, Türen, Stoßstangen, Spoilern, Spiegeln u.ä..

### Beispiel 1

### 1.1. Herstellung des mit UV-Strahlung härtbaren Beschichtungsmittels (K1)

### 1.1.1. Die Herstellung der organischen Lösung eines Urethanacrylats (organische Lösung der Komponente (KK1))

Es wurde ein Urethanacrylat aus den nachfolgend genannten Aufbaukomponenten hergestellt, indem das hydrierte Bisphenol-A in 2-Hydroxyethylacrylat bei 60°C unter Rühren grob dispergiert wurde. Zu dieser Suspension wurden die Isocyanate, Hydrochinonmonomethylether, 1,6-di-tert.-Butyl-para-Kresol und Methylethylketon gegeben. Nach der Zugabe von Dibutylzinndilaurat erwärmte sich der Ansatz. Bei Innentemperatur von 75 °C wurde mehrere Stunden gerührt, bis sich der NCO-Wert der Reaktionsmischung praktisch nicht mehr veränderte. Die gegebenenfalls nach der Umsetzung noch vorhandenen freien Isocyanatgruppen wurden durch Zugabe einer geringen Menge Methanol umgesetzt.
104,214 g hydriertes Bisphenol-A (entsprechend 0,87 Äquivalenten Hydroxylgruppen),
147,422 g (entsprechend 0,77 Äquivalenten Isocyanatgruppen) Basonat ® HI 100 der Firma BASF AG = handelsübliches Isocyanurat von Hexamethylendiisocyanat mit einem NCO-Gehalt von 21,5 - 22,5% (DIN EN ISO 11909),
147,422 g (entsprechend 0,77 Äquivalenten Isocyanatgruppen) Basonat ® HB 100 der Firma BASF AG = handelsübliches Biuret von Hexamethylendiisocyanat mit einem NCO-Gehalt von 22 - 23% (DIN EN ISO 11909),
124,994 g (entsprechend 0,51 Äquivalenten Isocyanatgruppen) Vestanat ® T1890 der Firma Degussa = handelsübliches Isocyanurat von Isophorondiisocyanat mit einem NCO-Gehalt von 11,7 - 12,3% (DIN EN ISO 11909)
131,378 g 2-Hydroxyethylacrylat (entsprechend 1,13 Äquivalenten Hydroxylgruppen)
0,328 g Hydrochinonmonomethylether (0,05 % auf fest)
0,655g 1,6-di-tert.-Butyl-para-Kresol (0,1 % auf fest)
Methylethylketon (70% Festkörper)
0,066 g Dibutylzinndilaurat (0,01 % auf fest)
4,500g Methanol (entsprechend 0,14 Äquivalenten Hydroxylgruppen)

Die so erhaltene Komponente (KK1) weist folgende Kennzahlen auf:
- im Mittel 4,6 ethylenisch ungesättigte Doppelbindungen pro Molekül
- einen Doppelbindungsgehalt von 1,74 mol Doppelbindungen pro 1.000 g Urethanacrylat-Festkörper
- im Mittel 2,2 Verzweigungspunkte pro Molekül
- 25 Gew.-% cyclische Strukturelemente, bezogen auf den Festkörpergehalt des Urethanacrylats

### 1.1.2. Die Herstellung eines mit UV-Strahlung härtbaren Beschichtungsmittels (K1)

In einem geeigneten Rührgefäß wurden 143,00 Gewichtsteile der oben beschriebenen organischen Lösung des Urethanacrylats (KK1) vorgelegt. Zur Vorlage wurde innerhalb von 30 Minuten eine Mischung aus 1,0 Gewichtsteilen Tinuvin ® 292 (handelsübliches HALS Lichtschutzmittel der Firma Ciba Specialty Chemicals auf Basis einer Mischung von Bis-(1,2,2,6,6-pentamethyl-4-piperidinyl)sebacat und Methyl(1,2,2,6,6-pentamethyl-4-piperidinyl)sebacat), 2,4 Gewichtsteilen der handelsübliches Lichtschutzmittellösung Tinuvin ® 400 (handelsübliches Lichtschutzmittel der Firma Ciba Specialty Chemicals auf Basis einer Mischung von2-(4- 2-(4-2-(4-((2-Hydroxy-3-dodecyloxypropyl)oxy)-2-hydroxyphenyl)-4,6-bis(2,4-dimethylphenyl)-1,3,5-triazin und 2-(4-((2-Hydroxy-3-tridecyloxypropyl)oxy)-2-hydroxyphenyl)-4,6-bis(2,4-dimethylphenyl)-1,3,5-triazin, 85%ig in 1-Methoxy-2-propanol); 0,8 Gewichtsteilen Lucirin ® TPO-L (handelsüblicher Photoinitiator der Firma BASF Aktiengesellschaft auf Basis Ethyl-2,4,6-Trimethylbenzoyldiphenyl-phosphinat)oxid), 2,40 Gewichtsteilen Irgacure ® 184 (handelsüblicher Photoinitiator der Firma Ciba Specialty Chemicals auf Basis 1-Hydroxy-cyclohexyl-1-Hydroxy-cyclohexyl-phenylketon)phenylketon), eingesetzt in Form von 3,0 Teilen einer 80%igen Lösung in Aceton, und 0,2 GewichtsteilenByk eines handelsüblichen polyethermodifizierten Polydimethylsiloxans (eingesetzt in Form von 1,7 Teilen einer handelsüblichen 12,5 %igen Lösung des polyethermodifizierten Polydimethylsiloxans Polydimethylsiloxans)in Xylol/Monophenylglykol 7/2 = Byk ® 306 der Firma Byk Chemie) unter ständigem Rühren bei Raumtemperatur zugegeben und mit 3-Butoxy-2-propanol auf einen Festkörpergehalt von 48% eingestellt. Anschließend wurde die resultierende Mischung während 30 Minuten bei Raumtemperatur gerührt.

### 1.2. Herstellung der mit einer Beschichtung versehenen, thermoformbaren Folie 1

Auf eine handelsübliche biaxial gestreckte Trägerfolie (T) auf Basis Polyester (Handelsprodukt Melinex 455 der Firma DuPont Teijin Films) mit einer möglichst glatten Oberfläche wurde das obenbeschriebene Beschichtungsmittel (K1) mit einer Naßfilmschichtdicke von 200 µm aufgerakelt, abgelüftet und anschließend im Umluftofen bei 150 °C getrocknet.

Auf die so erhaltene getrocknete, transparente Beschichtung (KT1) wurde ein Metallic-Wasserbasislack (Farbton: »Schwarzmetallic«) mit einer Naßfilmschichtdicke von 150 µm aufgerakelt, abgelüftet und anschließend im Umluftofen bei 150 °C getrocknet.

Auf die so erhaltene pigmentierte Beschichtung (PB) wurde ein handelsüblicher Verbund aus einer Haftvermittlerschicht (H) und einer Releasefolie auflaminiert.

Nun wurde die Releasefolie von der Haftvermittlerschicht entfernt und die so erhaltene Folie (F) mit der Haftvermittlerschicht auf eine thermoformbare Trägerfolie (C) einer Dicke von 1.200 µm auf Basis ASA/PC (Handelsprodukt aus Luran ® S der Firma BASF Aktiengesellschaft) auflaminiert.

Nun wurde die Trägerfolie (T) entfernt und auf die transparente Beschichtung (KT1) eine handelsübliche thermoformbare Schutzfolie (S) (Handelsprodukt GH-X 535 der Firma Bischof + Klein, Lengerich) auflaminiert.

### Beispiel 2

### 2.1. Herstellung des mit UV-Strahlung härtbaren Beschichtungsmittels (K2)

### 2.1.1. Die Herstellung der organischen Lösung eines Urethanacrylats (organische Lösung der Komponente (KK2))

Es wurde ein Urethanacrylat aus den nachfolgend genannten Aufbaukomponenten hergestellt, indem das hydrierte Bisphenol-A in 4-Hydroxybutylacrylat und Pentaerythrit-tri/tetra-acrylat bei 60°C unter Rühren grob dispergiert wurde. Zu dieser Suspension wurden die Isocyanate, Hydrochinonmonomethylether, 1,6-di-tert.-Butyl-para-Kresol und Butylacetat gegeben. Nach der Zugabe von Dibutylzinndilaurat erwärmte sich der Ansatz. Bei Innentemperatur von 75 °C wurde mehrere Stunden gerührt, bis sich der NCO-Wert der Reaktionsmischung praktisch nicht mehr veränderte. Die gegebenenfalls nach der Umsetzung noch vorhandenen freien Isocyanatgruppen wurden durch Zugabe einer geringen Menge an Methanol umgesetzt.
227,7 g hydriertes Bisphenol-A (entsprechend 1,89 Äquivalenten Hydroxylgruppen),
178,2 g 4-Hydroxybutylacrylat (entsprechend 1,24 Äquivalenten Hydroxylgruppen)
701,3 g Pentaerythrittri-/tetraacrylat (OH-Zahl = 110 mg(KOH)/g, entsprechend 1,37 Äquivalenten Hydroxylgruppen)
325,69 g (entsprechend 1,71 Äquivalenten Isocyanatgruppen) Basonat ® Hl 100 der Firma BASF AG = handelsübliches Isocyanurat von Hexamethylendiisocyanat mit einem NCO-Gehalt von 21,5 - 22,5% (DIN EN ISO 11909),
325,69 g (entsprechend 1,74 Äquivalenten Isocyanatgruppen) Basonat ® HB 100 der Firma BASF AG = handelsübliches Biuret von Hexamethylendiisocyanat mit einem NCO-Gehalt von 22 - 23% (DIN EN ISO 11909),
147,38 g (entsprechend 1,13 Äquivalenten Isocyanatgruppen) Desmodur® W der Firma Bayer MaterialScience AG = handelsübliches Dicyclohexylmethandiisocyanat mit einem NCO-Gehalt von ≥ 31,8%
0,953 g Hydrochinonmonomethylether (0,05 % auf fest)
1,906 g 1,6-di-tert.-Butyl-para-Kresol (0,1 % auf fest)
816,84 g Butylacetat (entspricht 70% Festkörper)
0,7624 g Dibutylzinndilaurat (0,04 % auf fest)
17,1 g Methanol (entsprechend 0,53 Äquivalenten Hydroxylgruppen)

Die so erhaltene Komponente (KK2) weist folgende Kennzahlen auf:
- im Mittel 7,1 ethylenisch ungesättigte Doppelbindungen pro Molekül
- einen Doppelbindungsgehalt von 2,92 mol Doppelbindungen pro 1.000 g Urethanacrylat-Festkörper
- im Mittel 1,5 Verzweigungspunkte pro Molekül
- 16 Gew.-% cyclische Strukturelemente, bezogen auf den Festkörpergehalt des Urethanacrylats

### 2.1.2. Die Herstellung eines mit UV-Strahlung härtbaren Beschichtungsmittels (K2)

In einem geeigneten Rührgefäß wurden 143,00 Gewichtsteile der oben beschriebenen organischen Lösung des Urethanacrylats (KK2) vorgelegt. Zur Vorlage wurde innerhalb von 30 Minuten eine Mischung aus 1,0 Gewichtsteilen Tinuvin ® 292 (handelsübliches HALS Lichtschutzmittel der Firma Ciba Specialty Chemicals auf Basis einer Mischung von Bis-(1,2,2,6,6-pentamethyl-4-piperidinyl)sebacat und Methyl(1,2,2,6,6-pentamethyl-4-piperidinyl)sebacat), 2,35 Gewichtsteilen Tinuvin ® 400 (handelsübliches Lichtschutzmittel der Firma Ciba Specialty Chemicals auf Basis einer Mischung von 2-(4-((2-Hydroxy-3-dodecyloxypropyl)oxy)-2-hydroxyphenyl)-4,6-bis(2,4-dimethylphenyl)-1,3,5-triazin und 2-(4-((2-Hydroxy-3-tridecyloxypropyl)oxy)-2-hydroxyphenyl)-4,6-bis(2,4-dimethylphenyl)-1,3,5-triazin), 0,8 Gewichtsteilen Lucirin ® TPO-L (handelsüblicher Photoinitiator der Firma BASF Aktiengesellschaft auf Basis Ethyl-2,4,6-Trimethylbenzoyl-phenyl-phosphinat), 2,40 Gewichtsteilen Irgacure ® 184 (handelsüblicher Photoinitiator der Firma Ciba Specialty Chemicals auf Basis 1-Hydroxy-cyclohexyl-phenylketon) und 0,40 Gewichtsteilen Byk ® 325 (handelsübliches Additiv der Firma Byk Chemie auf Basis eines polyethermodifizierten Polymethylalkyksiloxans) unter ständigem Rühren bei Raumtemperatur zugegeben und mit 1-Methoxypropyl-2-acetat auf einen Festkörpergehalt von 51 % eingestellt. Anschließend wurde die resultierende Mischung während 30 Minuten bei Raumtemperatur gerührt.

### 2.2. Herstellung der mit einer Beschichtung versehenen, thermoformbaren Folie 2

Die Herstellung der mit einer Beschichtung versehenen Folie 2 erfolgte analog zur Herstellung der Folie 1 des Beispiels 1 mit dem Unterschied, dass nun das mit UV Strahlung härtbare Beschichtungsmittel (K2) anstelle des Beschichtungsmittels (K1) eingesetzt wurde.

## Patentansprüche

1. Verfahren zur Herstellung von eine Beschichtung (B) aufweisenden Folien (F), bei dem auf eine ggf. vorbehandelte Oberfläche (T1) einer Trägerfolie (T)
1. ein vernetzbares Beschichungsmittel (K), das eine radikalisch vernetzbare Komponente (KK) enthält und das nach der Endvernetzung eine transparente Beschichtung (KE) ergibt, aufgebracht wird,
2. das in Stufe 1 aufgebrachte Beschichtungsmittel (K) getrocknet und/oder partiell vernetzt wird, wodurch eine noch nicht endvernetzte Beschichtung (KT) erzeugt wird,
3. auf die noch nicht endvernetzte Beschichtung (KT) ein pigmentiertes Beschichtungsmittel (P) aufgebracht wird und
4. aus dem in Stufe 3 aufgebrachten Beschichtungsmittel (P) eine Beschichtung (PB) erzeugt wird,
5. ggf. auf die Beschichtung (PB) eine Haftvermittlerschicht (H) aufgebracht und ggf. getrocknet wird,
wobei das vernetzbare Beschichtungsmittel (K) eine radikalisch vernetzbare Komponente (KK) enthält, die
(i) ein oder mehrere Oligo- und/oder ein oder mehrere Polyurethan(meth)acrylate enthält und
(ii) ein zahlenmittleres Molekulargewicht von 1.000 bis 50.000 g/mol und
(iii) einen Doppelbindungsgehalt von 1,0 bis 5,0 mol Doppelbindungen pro 1.000 g reaktive Komponente (KK),
aufweist, **dadurch gekennzeichnet, dass** die radikalisch vernetzbare Komponente (KK)
(iv)im Mittel pro Molekül > 1 Verzweigungspunkt,
(v) 5- 50 Gew. -%, jeweils bezogen auf das Gewicht der Komponente (KK), cyclische Strukturelemente und
(vi) mindestens ein aliphatisches Strukturelement mit mindestens 6 C-Atomen in der Kette aufweist und
(vii) Carbamat- und/oder Biuret- und/oder Allophanat- und/oder Harnstoff- und/oder Amidgruppen enthält.

2. Verfahren nach Anspruch 1, **dadurch gekennzeichnet, dass** auf die Beschichtung (PB) eine Haftvermittlerschicht (H) und eine von (T) verschiedene, thermoformbare Trägerfolie (C) aufgebracht werden.

3. Verfahren nach Anspruch 1, **dadurch gekennzeichnet, dass** auf die Beschichtung (PB) eine Haftvermittlerschicht (H) durch Auflaminieren eines Verbundes aus der Haftvermittlerschicht (H) und einer Releasefolie (R) aufgebracht wird.

4. Verfahren nach einem der Ansprüche 1 bis 3, **dadurch gekennzeichnet, dass** die Trägerfolie (T) nach Stufe 4 oder nach Stufe 5 des Verfahrens entfernt und ggf. eine von (T) verschiedene, thermoformbare Schutzfolie (S) auf die noch nicht endvernetzte Beschichtung (KT) aufgebracht wird.

5. Eine Beschichtung (B) aufweisende Folie (F), herstellbar, indem auf eine ggf. vorbehandelte Oberfläche (T1) einer Trägerfolie (T)
1. ein vernetzbares Beschichungsmittel (K), das eine radikalisch vernetzbare Komponente (KK) enthält und das nach der Endvernetzung eine transparente Beschichtung (KE) ergibt, aufgebracht wird,
2. das in Stufe 1 aufgebrachte Beschichtungsmittel (K) getrocknet und/oder partiell vernetzt wird, wodurch eine noch nicht endvernetzte Beschichtung (KT) erzeugt wird,
3. auf die noch nicht endvernetzte Beschichtung (KT) ein pigmentiertes Beschichtungsmittel (P) aufgebracht wird und
4. aus dem in Stufe 3 aufgebrachten Beschichtungsmittel (P) eine Beschichtung (PB) erzeugt wird,
5. ggf. auf die Beschichtung (PB) eine Haftvermittlerschicht (H) aufgebracht und ggf. getrocknet wird,
wobei das vernetzbare Beschichtungsmittel (K) eine radikalisch vernetzbare Komponente (KK) enthält, die
(i) ein oder mehrere Oligo- und/oder ein oder mehrere Polyurethan(meth)acrylate enthält und
(ii) ein zahlenmittleres Molekulargewicht von 1.000 bis 50.000 g/mol und
(iii) einen Doppelbindungsgehalt von 1,0 bis 5,0 mol Doppelbindungen pro 1.000 g reaktive Komponente (KK),
aufweist, **dadurch gekennzeichnet, dass** die radikalisch vernetzbare Komponente (KK)
(iv) im Mittel pro Molekül > 1 Verzweigungspunkt,
(v) 5- 50 Gew. -%, jeweils bezogen auf das Gewicht der Komponente (KK), cyclische Strukturelemente,
(vi) mindestens ein aliphatisches Strukturelement mit mindestens 6 C-Atomen in der Kette aufweist und
(vii) Carbamat- und/oder Biuret- und/oder Allophanat- und/oder Harnstoff- und/oder Amidgruppen enthält.

6. Folie nach Anspruch 5, **dadurch gekennzeichnet, dass** auf der Beschichtung (PB) eine Haftvermittlerschicht (H) und auf (H) eine von (T) verschiedene, thermoformbare Trägerfolie (C) oder eine Releasefolie (R) angeordnet ist.

7. Folie nach Anspruch 5 oder 6, **dadurch gekennzeichnet, dass** die Trägerfolie (T) ) nach Stufe 4 oder Stufe 5 entfernt und eine von (T) verschiedene, thermoformbare Schutzfolie (S) auf die noch nicht endvernetzte Beschichtung (KT) aufgebracht worden ist.

8. Verfahren nach einem der Ansprüche 1 bis 4 oder Folie nach einem der Ansprüche 5 bis 7, **dadurch gekennzeichnet, dass** die radikalisch vernetzbare Komponente (KK) einen durchschnittlichen Gehalt an Carbamat- und/oder Biuret- und/oder Allophanat- und/oder Harnstoff- und/oder Amidgruppen von mehr als 0 bis 2,0 mol pro 1000 g reaktive Komponente (KK), vorzugsweise einen Gehalt von 0,1 bis 1,1 mol und besonders bevorzugt einen Gehalt von 0,2 bis 0,7 mol pro 1000 g reaktive Komponente (KK) aufweist.

9. Verfahren nach einem der Ansprüche 1 bis 4 oder 8 oder Folie nach einem der Ansprüche 5 bis 8, **dadurch gekennzeichnet, dass** die radikalisch vernetzbare Komponente (KK) im Mittel mehr als 1, insbesondere mehr als 2 bis 20,0 Doppelbindungen pro Molekül aufweist und/oder dass die radikalisch vernetzbare Komponente (KK) zusätzlich aliphatische Strukturelemente mit 4 und/oder 5 C-Atomen in der Kette aufweist.

10. Verfahren nach einem der Ansprüche 1 bis 4 oder 8 bis 9 oder Folie nach einem der Ansprüche 5 bis 9, **dadurch gekennzeichnet, dass** die Trägerfolie (T) eine Rauigkeit von < 10 nm aufweist.

11. Verfahren nach einem der Ansprüche 1 bis 4 oder 8 bis 10 oder Folie nach einem der Ansprüche 5 bis 10, **dadurch gekennzeichnet, dass** die radikalisch vernetzbare Komponente (KK) als cyclische Strukturelemente monocyclische Strukturelemente mit 4 bis 8 Ringgliedern und/oder di- und/oder tri- und/oder polycyclische Strukturelemente mit 7 bis 18 Ringgliedern aufweist und/oder dass die cyclischen Strukturelemente substituiert sind.

12. Verfahren nach einem der Ansprüche 1 bis 4 oder 8 bis 11 oder Folie nach einem der Ansprüche 5 bis 11, **dadurch gekennzeichnet, dass** die radikalisch vernetzbare Komponente (KK) als cyclische Strukturelemente
(i) cycloaliphatische Strukturelemente und/oder
(ii) heterocyclische Strukturelemente, insbesondere heterocyclische Strukturelemente, bei denen die Anzahl der Heteroatome pro Ring 1 bis 8 beträgt und/oder bei denen die Heteroatome ausgewählt sind aus der Gruppe Stickstoff und/oder Sauerstoff und/oder Schwefel,
und/oder
(iii) aromatische Strukturelemente
aufweist, wobei bevorzugt der Gehalt an aromatischen Strukturelementen maximal 10 Gew. -%, jeweils bezogen auf das Gewicht der Komponente (KK), beträgt.

13. Verfahren nach einem der Ansprüche 1 bis 4 oder 8 bis 12 oder Folie nach einem der Ansprüche 5 bis 12, **dadurch gekennzeichnet, dass** die radikalisch vernetzbare Komponente (KK) als cyclische Strukturelemente Tricyclodekanringe und/oder Cyclohexanringe und/oder Isocyanuratringe und/oder Triazinringe enthält, wobei die cyclischen Strukturelemente ggf. substituiert sein können und/oder dass die radikalisch vernetzbare Komponente (KK) als aliphatisches Strukturelement mit mindestens 6 C-Atomen in der Kette aliphatische Strukturelemente mit 6 bis 18 C-Atomen in der Kette, insbesondere Hexamethylenketten, enthält.

14. Verfahren nach einem der Ansprüche 1 bis 4 oder 8 bis 13 oder Folie nach einem der Ansprüche 5 bis 13, **dadurch gekennzeichnet, dass** die radikalisch vernetzbare Komponente (KK) hergestellt worden ist unter Verwendung von Hexamethylendiisocyanat und/oder Isophorondiisocyanat und/oder Methylen-bis-(4-isocyanatocyclo-hexan) und/oder den entsprechenden Isocyanuraten und/oder Biureten und/oder Allophanaten dieser Isocyanate und/oder unter Verwendung von Hydroxyethylacrylat und/oder 4-Hydroxybutylacrylat und/- oder Pentaerythrittriacrylat und/oder Isopropylidendicyclohexanol.

15. Verfahren nach einem der Ansprüche 1 bis 4 oder 8 bis 14, **dadurch gekennzeichnet, dass** die radikalisch vernetzbare Komponente (KK) weniger als 5 Gew. -%, bevorzugt weniger als 1 Gew. -%, jeweils bezogen auf das Gewicht der Komponente (KK), und insbesondere im wesentlichen keine nachweisbaren, freien Isocyanatgruppen aufweist.

16. Verwendung der Folien (F) nach einem der Ansprüche 5 bis 14 zur Herstellung von Formteilen aus einem Kunststoffmaterial (KM), **dadurch gekennzeichnet, dass** das Kunststoffmaterial (KM) mit der Folie (F) versehen ist.

17. Verwendung nach Anspruch 16, **dadurch gekennzeichnet, dass** die Folie (F) mittels einer Haftvermittlerschicht (H) auf das Kunststoffmaterial (KM) auflaminiert worden ist.

18. Verwendung nach Anspruch 16, **dadurch gekennzeichnet, dass** die Folie (F) thermogeformt und mit dem Kunststoffmaterial (KM) hinterspritzt oder hinterschäumt worden ist.

19. Verwendung der Folien nach einem der Ansprüche 5 bis 14 zur Herstellung von Karosserie-innen- oder -Außenbauteilen oder Bauteilen für den Schiff- und Flugzeugbau oder von Bauteilen für Haushalts- und Elektrogeräte.

## Claims

1. Process for producing sheets (F) bearing a coating (B), in which an optionally pretreated surface (T1) of a backing sheet (T) has applied to it
1. a crosslinkable coating composition (K) which comprises a free-radically crosslinkable component (KK) and which after crosslinking to completion gives a transparent coating (KE),
2. the coating composition (K) applied in stage 1 is dried and/or partially crosslinked, to give a coating (KT) as yet not crosslinked to completion,
3. a pigmented coating composition (P) is applied to the coating (KT) as yet not crosslinked to completion, and
4. a coating (PB) is produced from the coating composition (P) applied in stage 3,
5. a tiecoat (H) is optionally applied to the coating (PB) and if desired is dried,
the crosslinkable coating composition (K) comprising a free-radically crosslinkable component (KK) which
(i) comprises one or more oligo- and/or one or more polyurethane (meth)acrylates and
(ii) has a number-average molecular weight of from 1000 to 50 000 g/mol and
(iii) has a double bond content of from 1.0 to 5.0 mol of double bonds per 1000 g of reactive component (KK),
**characterized in that** the free-radically crosslinkable component (KK)
(iv) contains on average per molecule > 1 branching point,
(v) contains 5% - 50% by weight, based in each case on the weight of component (KK), of cyclic structural elements,
(vi) contains at least one aliphatic structural element having at least 6 carbon atoms in the chain, and
(vii) contains carbamate and/or biuret and/or allophanate and/or urea and/or amide groups.

2. Process according to claim 1, **characterized in that** a tiecoat (H) and a thermoformable backing sheet (C), which is different from (T), are applied to the coating (PB).

3. Process according to claim 1, **characterized in that** a tiecoat (H) is applied by laminating an assembly comprising the tiecoat (H) and a release film (R) to the coating (PB).

4. Process according to any one of claims 1 to 3, **characterized in that** the backing sheet (T) is removed after stage 4 or after stage 5 of the process and optionally a thermoformable protective film (S), different from (T), is applied to the coating (KT) as yet not crosslinked to completion.

5. Sheet (F) bearing a coating (B), producible by applying, to an optionally pretreated surface (T1) of a backing sheet (T)
1. a crosslinkable coating composition (K) which comprises a free-radically crosslinkable component (KK) and which after crosslinking to completion gives a transparent coating (KE),
2. the coating composition (K) applied in stage 1 is dried and/or partially crosslinked, to give a coating (KT) as yet not crosslinked to completion,
3. a pigmented coating composition (P) is applied to the coating (KT) as yet not crosslinked to completion, and
4. a coating (PB) is produced from the coating composition (P) applied in stage 3,
5. a tiecoat (H) is optionally applied to the coating (PB) and if desired is dried,
the crosslinkable coating composition (K) comprising a free-radically crosslinkable component (KK) which
(i) comprises one or more oligo- and/or one or more polyurethane (meth)acrylates and
(ii) has a number-average molecular weight of from 1000 to 50 000 g/mol and
(iii) has a double bond content of from 1.0 to 5.0 mol of double bonds per 1000 g of reactive component (KK),
**characterized in that** the free-radically crosslinkable component (KK)
(iv) contains on average per molecule > 1 branching point,
(v) contains 5% - 50% by weight, based in each case on the weight of component (KK), of cyclic structural elements,
(vi) contains at least one aliphatic structural element having at least 6 carbon atoms in the chain, and
(vii) contains carbamate and/or biuret and/or allophanate and/or urea and/or amide groups.

6. Sheet according to claim 5, **characterized in that** a tiecoat (H) is disposed on the coating (PB) and a thermoformable backing sheet (C), different from (T), or a release film (R) is disposed on (H).

7. Sheet according to claim 5 or 6, **characterized in that** the backing sheet (T) has been removed after stage 4 or stage 5 and a thermoformable protective film (S), different from (T), has been applied to the coating (KT) as yet not crosslinked to completion.

8. Process according to any one of claims 1 to 4 or sheet according to any one of claims 5 to 7, **characterized in that** the average carbamate and/or biuret and/or allophanate and/or urea and/or amide group content of the free-radically crosslinkable component (KK) is from more than 0 to 2.0 mol per 1000 g of reactive component (KK), preferably from 0.1 to 1.1 mol and more preferably from 0.2 to 0.7 mol per 1000 g of reactive component (KK).

9. Process according to any one of claims 1 to 4 and 8 or sheet according to any one of claims 5 to 8, **characterized in that** the free-radically crosslinkable component (KK) contains on average more than 1, in particular more than 2 to 20.0 double bonds per molecule and/or **in that** the free-radically crosslinkable component (KK) further comprises aliphatic structural elements having 4 and/or 5 carbon atoms in the chain.

10. Process according to any one of claims 1 to 4 and 8 to 9 or sheet according to any one of claims 5 to 9, **characterized in that** the backing sheet (T) has a roughness of < 10 nm.

11. Process according to any one of claims 1 to 4 and 8 to 10 or sheet according to any one of claims 5 to 10, **characterized in that** the free-radically crosslinkable component (KK) comprises, as cyclic structural elements, monocyclic structural elements having 4 to 8 ring members and/or dicyclic and/or tricyclic and/or polycyclic structural elements having 7 to 18 ring members and/or **in that** the cyclic structural elements are substituted.

12. Process according to any one of claims 1 to 4 and 8 to 11 or sheet according to any one of claims 5 to 11, **characterized in that** the free-radically crosslinkable component (KK) comprises as cyclic structural elements
(i) cycloaliphatic structural elements and/or
(ii) heterocyclic structural elements, especially heterocyclic structural elements in which the number of heteroatoms per ring is 1 to 8 and/or in which the heteroatoms are selected from the group nitrogen and/or oxygen and/or sulfur,
and/or
(iii) aromatic structural elements,
the amount of aromatic structural elements preferably being not more than 10% by weight, based in each case on the weight of component (KK) .

13. Process according to any one of claims 1 to 4 and 8 to 12 or sheet according to any one of claims 5 to 12, **characterized in that** the free-radically crosslinkable component (KK) comprises, as cyclic structural elements, tricyclodecane rings and/or cyclohexane rings and/or isocyanurate rings and/or triazine rings, it being possible for the cyclic structural elements to be substituted if appropriate and/or **in that** the free-radically crosslinkable component (KK) comprises, as aliphatic structural element having at least 6 carbon atoms in the chain, aliphatic structural elements having 6 to 18 carbon atoms in the chain, especially hexamethylene chains.

14. Process according to any one of claims 1 to 4 and 8 to 13 or sheet according to any one of claims 5 to 13, **characterized in that** the free-radically crosslinkable component (KK) has been prepared using hexamethylene diisocyanate and/or isophorone diisocyanate and/or methylenebis(4-isocyanatocyclohexane) and/or the corresponding isocyanurates and/or biurets and/or allophanates of these isocyanates and/or using hydroxyethyl acrylate and/or 4-hydroxybutyl acrylate and/or pentaerythrityl triacrylate and/or isopropylidene-dicyclohexanol.

15. Process according to any one of claims 1 to 4 and 8 to 14, **characterized in that** the free-radically crosslinkable component (KK) contains less than 5%, preferably less than 1%, by weight, based in each case on the weight of component (KK), of detectable free isocyanate groups, and in particular contains substantially no such isocyanate groups.

16. Use of the sheets (F) according to any one of claims 5 to 14 for producing moldings comprising a polymeric material (KM), **characterized in that** the polymeric material (KM) has been provided with the sheet (F).

17. Use according to claim 16, **characterized in that** the sheet (F) has been laminated by a tiecoat (H) onto the polymeric material (KM).

18. Use according to claim 16, **characterized in that** the sheet (F) has been thermoformed and injection-backmolded or foam-backed with the polymeric material (KM).

19. Use of the sheets according to any one of claims 5 to 14 for producing interior or exterior bodywork components or components for shipbuilding or aircraft construction or components for household or electrical appliances.

## Revendications

1. Procédé pour la production de films (F) comportant un revêtement (B), dans lequel, sur une surface (T1) éventuellement prétraitée d'un film de support (T)
1. on applique une composition de revêtement (K) réticulable qui contient un composant (KK) réticulable par voie radicalaire et qui donne après la réticulation finale un revêtement transparent (KE),
2. la composition de revêtement (K) appliquée dans l'étape 1 est séchée et/ou partiellement réticulée, de sorte qu'est produit un revêtement (KT) non encore complètement réticulé,
3. on applique une composition de revêtement pigmentée (P) sur le revêtement (KT) non encore complètement réticulé et
4. un revêtement (PB) est produit à partir de la composition de revêtement (P) appliquée dans l'étape 3,
5. une couche de promoteur d'adhérence (H) est éventuellement appliquée sur le revêtement (PB) et éventuellement séchée,
la composition de revêtement (K) réticulable contenant un composant (KK) réticulable par voie radicalaire, qui
(i) contient un ou plusieurs oligo- et/ou un ou plusieurs polyuréthanne(méth)acrylates et
(ii) a une masse moléculaire moyenne en nombre de 1 000 à 50 000 g/mole et
(iii) une teneur en doubles liaisons de 1,0 à 5,0 moles de doubles liaisons pour 1 000 g de composant réactif (KK),
**caractérisé en ce que** le composant (KK) réticulable par voie radicalaire
(iv) comporte en moyenne plus d'un point de ramification par molécule,
(v) comporte de 5 à 50 % en poids, par rapport au poids du composant (KK), d'éléments structuraux cycliques et
(vi) au moins un élément structural aliphatique comportant au moins 6 atomes de carbone dans la chaîne et
(vii) contient des groupes carbamate et/ou biuret et/ou allophanate et/ou urée et/ou amido.

2. Procédé selon la revendication 1, **caractérisé en ce qu'**on applique sur le revêtement (PB) une couche de promoteur d'adhérence (H) et un film de support (C) thermoformable, différent de (T).

3. Procédé selon la revendication 1, **caractérisé en ce qu'**on applique sur le revêtement (PB) une couche de promoteur d'adhérence (H) par application par laminage d'un composite constitué de la couche de promoteur d'adhérence (H) et d'un film de libération (R) .

4. Procédé selon l'une quelconque des revendications 1 à 3, **caractérisé en ce qu'**on retire le film de support (T) après l'étape 4 ou après l'étape 5 du procédé et éventuellement on applique sur le revêtement (KT) non encore complètement réticulé un film protecteur (S) thermoformable, différent de (T).

5. Film (F) comportant un revêtement (B), pouvant être produit par un procédé dans lequel, sur une surface (T1) éventuellement prétraitée d'un film de support (T)
1. on applique une composition de revêtement (K) réticulable qui contient un composant (KK) réticulable par voie radicalaire et qui donne après la réticulation finale un revêtement transparent (KE),
2. la composition de revêtement (K) appliquée dans l'étape 1 est séchée et/ou partiellement réticulée, de sorte qu'est produit un revêtement (KT) non encore complètement réticulé,
3. on applique une composition de revêtement pigmentée (P) sur le revêtement (KT) non encore complètement réticulé et
4. un revêtement (PB) est produit à partir de la composition de revêtement (P) appliquée dans l'étape 3,
5. une couche de promoteur d'adhérence (H) est éventuellement appliquée sur le revêtement (PB) et éventuellement séchée,
la composition de revêtement (K) réticulable contenant un composant (KK) réticulable par voie radicalaire, qui
(i) contient un ou plusieurs oligo- et/ou un ou plusieurs polyuréthanne(méth)acrylates et
(ii) a une masse moléculaire moyenne en nombre de 1 000 à 50 000 g/mole et
(iii) une teneur en doubles liaisons de 1,0 à 5,0 moles de doubles liaisons pour 1 000 g de composant réactif (KK),
**caractérisé en ce que** le composant (KK) réticulable par voie radicalaire
(iv) comporte en moyenne plus d'un point de ramification par molécule,
(v) comporte de 5 à 50 % en poids, par rapport au poids du composant (KK), d'éléments structuraux cycliques et
(vi) au moins un élément structural aliphatique comportant au moins 6 atomes de carbone dans la chaîne et
(vii) contient des groupes carbamate et/ou biuret et/ou allophanate et/ou urée et/ou amido.

6. Film selon la revendication 5, **caractérisé en ce que** sur le revêtement (PB) est disposée une couche de promoteur d'adhérence (H) et, sur (H), un film de support (C) thermoformable, différent de (T) ou un film de libération (R).

7. Film selon la revendication 5 ou 6, **caractérisé que** le film de support (T) est retiré après l'étape 4 ou l'étape 5 et un film protecteur (S) thermoformable, différent de (T) a été appliqué sur le revêtement (KT) non encore complètement réticulé.

8. Procédé selon l'une quelconque des revendications 1 à 4 ou film selon l'une quelconque des revendications 5 à 7, **caractérisé en ce que** le composant (KK) réticulable par voie radicalaire a une teneur moyenne en groupes carbamate et/ou biuret et/ou allophanate et/ou urée et/ou amido de plus de 0 à 2,0 moles pour 1 000 g de composant réactif (KK), de préférence une teneur de 0,1 à 1,1 mole et de façon particulièrement préférée une teneur de 0,2 à 0,7 mole pour 1 000 g de composant réactif (KK).

9. Procédé selon l'une quelconque des revendications 1 à 4 ou 8 ou film selon l'une quelconque des revendications 5 à 8, **caractérisé en ce que** le composant (KK) réticulable par voie radicalaire comporte en moyenne plus de 1, en particulier plus de 2 à 20,0 doubles liaisons par molécule et/ou **en ce que** le composant (KK) réticulable par voie radicalaire comporte en outre des éléments structuraux aliphatiques ayant 4 et/ou 5 atomes de carbone dans la chaîne.

10. Procédé selon l'une quelconque des revendications 1 à 4 ou 8 à 9 ou film selon l'une quelconque des revendications 5 à 9, **caractérisé en ce que** le film de support (T) présente une rugosité de < 10 nm.

11. Procédé selon l'une quelconque des revendications 1 à 4 ou 8 à 10 ou film selon l'une quelconque des revendications 5 à 10, **caractérisé en ce que** le composant (KK) réticulable par voie radicalaire comporte en tant qu'éléments structuraux cycliques des éléments structuraux monocycliques à 4-8 chaînons et/ou des éléments structuraux di-, tri- et/ou polycycliques à 7-18 chaînons et/ou **en ce que** les éléments structuraux cycliques sont substitués.

12. Procédé selon l'une quelconque des revendications 1 à 4 ou 8 à 11 ou film selon l'une quelconque des revendications 5 à 11, **caractérisé en ce que** le composant (KK) réticulable par voie radicalaire comporte en tant qu'éléments structuraux cycliques
(i) des éléments structuraux cycloaliphatiques et/ou
(ii) des éléments structuraux hétérocycliques, en particulier des éléments structuraux hétérocycliques dans lesquels le nombre des hétéroatomes par cycle va de 1 à 8 et/ou dans lesquels les hétéroatomes sont choisis dans l'ensemble constitué par les atomes d'azote et/ou d'oxygène et/ou de soufre,
et/ou
(iii) des éléments structuraux aromatiques,
la teneur en éléments structuraux aromatiques étant de préférence au maximum de 10 % en poids, chaque fois par rapport au poids du composant (KK).

13. Procédé selon l'une quelconque des revendications 1 à 4 ou 8 à 12 ou film selon l'une quelconque des revendications 5 à 12, **caractérisé en ce que** le composant (KK) réticulable par voie radicalaire contient en tant qu'éléments structuraux cycliques des cycles tricyclodécane et/ou des cycles cyclohexane et/ou des cycles isocyanurate et/ou des cycles triazine, les éléments structuraux cycliques pouvant éventuellement être substitués et/ou **en ce que** le composant (KK) réticulable par voie radicalaire contient en tant qu'élément structural aliphatique comportant au moins 6 atomes de carbone dans la chaîne des éléments structuraux ayant de 6 à 18 atomes de carbone dans la chaîne, en particulier des chaînes hexaméthylène.

14. Procédé selon l'une quelconque des revendications 1 à 4 ou 8 à 13 ou film selon l'une quelconque des revendications 5 à 13, **caractérisé en ce que** le composant (KK) réticulable par voie radicalaire a été préparé avec utilisation d'hexaméthylène-diisocyanate et/ou d'isophorone-diisocyanate et/ou de méthylène-bis(4-isocyanatocyclohexane) et/ou des isocyanurates et/ou biurets et/ou allophanates correspondants de ces isocyanates et/ou avec utilisation d'acrylate d'hydroxyéthyle et/ou d'acrylate de 4-hydroxybutyle et/ou de triacrylate de pentaérythritol et/ou d'isopropylidène-dicyclohexanol.

15. Procédé selon l'une quelconque des revendications 1 à 4 ou 8 à 14, **caractérisé en ce que** le composant (KK) réticulable par voie radicalaire comporte moins de 5 % en poids, de préférence moins de 1 % en poids, chaque fois par rapport au poids du composant (KK), de groupes isocyanate libres détectables, et en particulier n'en comporte pratiquement aucun.

16. Utilisation des films (F) selon l'une quelconque des revendications 5 à 14, pour la fabrication de pièces moulées à base d'un matériau en matière plastique (KM), **caractérisée en ce que** le matériau en matière plastique (KM) est muni du film (F).

17. Utilisation selon la revendication 16, **caractérisée en ce que** le film (F) a été appliqué par laminage au moyen d'une couche de promoteur d'adhérence (H) sur le matériau en matière plastique (KM).

18. Utilisation selon la revendication 16, **caractérisée en ce que** le film (F) a été thermoformé et appliqué par injection ou moussage sur le matériau en matière plastique (KM).

19. Utilisation des films selon l'une quelconque des revendications 5 à 14, pour la fabrication de pièces de construction intérieures ou extérieures de carrosseries ou de pièces pour la construction de bateaux et d'aéronefs ou de pièces de construction pour appareils électriques et ménagers.
